(19) Europäisches Patentamt

European Patent Office

Office européen des brevets

(11) **EP 1 934 624 B1**

(12) **FASCICULE DE BREVET EUROPEEN**

(45) Date de publication et mention
de la délivrance du brevet:
**20.05.2009 Bulletin 2009/21**

(21) Numéro de dépôt: **06807007.7**

(22) Date de dépôt: **05.10.2006**

(51) Int Cl.:
***G01S 1/00*** (2006.01)

(86) Numéro de dépôt international:
**PCT/EP2006/067097**

(87) Numéro de publication internationale:
**WO 2007/042461 (19.04.2007 Gazette 2007/16)**

(54) **RECEPTEUR GNSS A PRECISION AMELIOREE UTILISANT DEUX PORTEUSES DE SIGNAL**

**GNSS-EMPFÄNGER MIT VERBESSERTER PRÄZISION MIT ZWEI SIGNALTRÄGERN**

**GNSS RECEIVER WITH ENHANCED PRECISION USING TWO SIGNAL CARRIERS**

(84) Etats contractants désignés:
**BE GB IT**

(30) Priorité: **14.10.2005 FR 0510513**

(43) Date de publication de la demande:
**25.06.2008 Bulletin 2008/26**

(73) Titulaire: **THALES**
**92200 Neuilly sur Seine (FR)**

(72) Inventeurs:
• **MARTIN, Nicolas**
**26500 Bourg lès Valence (FR)**
• **GUICHON, Hervé**
**07500 Guilherand (FR)**
• **REVOL, Marc**
**26120 Upic (FR)**

(74) Mandataire: **Lucas, Laurent Jacques**
**Marks & Clerk France**
**Conseils en Propriété Industrielle**
**Immeuble " Visium "**
**22, avenue Aristide Briand**
**94117 Arcueil Cedex (FR)**

(56) Documents cités:
**WO-A-03/054572**          **WO-A-03/107031**
**US-A- 5 535 278**

• **KAPLAN ET AL: "UNDERSTANDING GPS - Principles and Applications" UNDERSTANDING GPS PRINCIPLES AND APPLICATIONS, 1996, pages 142-150, XP002165743**

**Description**

L'invention concerne les récepteurs de navigation par satellite utilisant les signaux émis par des satellites comportant chacun deux porteuses proches en fréquence modulées par des codes d'étalement de manière synchrone.

Les systèmes de positionnement par satellite mettent en oeuvre plusieurs satellites transmettant leurs positions par des signaux radioélectriques à un récepteur placé à la position à localiser estimant les distances, dites pseudo-distances, qui le séparent des satellites à partir des temps de propagation des signaux des satellites captés. La localisation du récepteur est effectuée par une technique voisine de la triangulation et cette localisation est d'autant plus précise que les positions des satellites sont connues avec précision du récepteur et que les mesures des pseudo-distances faites par le récepteur sont précises.

Les positions des satellites sont déterminées à partir d'un réseau de stations sol de poursuite indépendant des récepteurs de positionnement. Elles sont communiquées aux récepteurs de positionnement par les satellites eux-mêmes par les données modulant les signaux émis.

Les pseudo-distances sont déduites par les récepteurs de positionnement des retards apparents présentés par les signaux reçus : Ces signaux sont datés à l'émission par les horloges des satellites, qui sont synchronisée sur le temps système, et à la réception par l'horloge du récepteur, pouvant présenter un biais par rapport au temps du système. Les distances déduites des temps de propagation ainsi mesurés sont appelées pseudo-distances car elles sont entachées d'une erreur commune pouvant être importante, due au biais de l'horloge du récepteur. Ce biais est éliminé lors de la résolution du point à condition que les signaux d'au moins quatre satellites soient reçus.

Si la précision de la connaissance des positions des satellites du système de positionnement est indépendante des performances d'un récepteur de positionnement, ce n'est pas le cas de celle des mesures de pseudo-distance qui dépend de la précision des mesures de temps de propagation des signaux, au niveau du récepteur.

Les signaux radioélectriques émis par des satellites parcourant de grandes distances, et étant émis avec des puissances limitées, parviennent avec de très faibles puissances aux récepteurs, noyés dans un bruit radioélectrique. Pour améliorer leurs réceptions on a cherché à les rendre les moins sensibles possible aux parasites à bande étroite, en augmentant leurs largeurs de bande au moyen de la technique de la bande étalée. Les systèmes actuels et prévus dans un futur proche, de positionnement par satellites utilisent, pour les signaux radioélectriques émis par leurs satellites, la technique d'étalement de bande par modulation à l'aide de séquences binaires pseudo-aléatoires, technique dite DSSS (sigle tiré de l'anglo-saxon : Direct Sequence Spread Spectrum"). Cette modulation DSSS consiste après avoir mis les données à transmettre sous la forme d'une suite d'éléments binaires à débit régulier, à effectuer le produit de chaque élément binaire d'information avec une séquence binaire pseudo-aléatoire connue à l'avance de débit nettement plus rapide. L'étalement de bande obtenu est proportionnel au débit de la suite binaire pseudo-aléatoire d'étalement. On parle de code d'étalement.

Les données à transmettre par les satellites, une fois mises sous forme d'une suite de données binaires étalée en fréquence par un code d'étalement selon la technique DSSS, sont transposées dans la plage de fréquence d'émission par modulation avec une porteuse d'émission.

En réception, les données contenues dans un signal radioélectrique de satellite d'un système de positionnement sont extraites par deux démodulations successives : une première démodulation à l'aide d'une porteuse engendrée localement par un oscillateur piloté par une boucle de poursuite en fréquence et en phase dite PLL (sigle tiré de l'anglo-saxon : "Phase Lock Loop") - ou boucle de phase de porteuse - permettant de transposer le signal reçu en bande de base et une deuxième démodulation à l'aide de code d'étalement engendrés localement par un générateur de code piloté par une boucle de poursuite en retard dite DLL (sigle tiré de l'anglo-saxon : Delay Lock Loop) - ou boucle de code - permettant de désétaler la suite de données binaires présente dans le signal reçu. Les codes d'étalement engendrés localement sont identiques à ceux émis par le satellite, au retard prés dû à la propagation dans l'espace. Lorsque qu'une boucle de code est accrochée le code engendré localement est en phase avec le code contenu dans le signal reçu du satellite

Ainsi les retards affectant les code d'étalement reçus sont accessibles au niveau des signaux d'asservissement des boucles de code. Les retards constatés par ces boucles permettent des mesures non ambiguës ou faiblement ambiguës, des temps de propagation des signaux car les nombres de séquences pseudo-aléatoires entières répétées s'écoulant pendant les trajets des signaux sont relativement petits. On parle de mesures de code.

Par exemple, pour le système de positionnement par satellites GPS (sigle tiré de l'anglo-saxon :Global Positioning System), la séquence binaire pseudo-aléatoire répétée la plus courte, celle utilisée pour l'étalement des signaux de satellites de type C/A (sigle provenant de l'anglo-saxon :"Coarse/Acquisition Code ou Clear/Acquisition Code), est composée de 1023 éléments binaires avec un débit de 1,023 MHz et une durée d'une milliseconde. Sa durée totale correspond à un trajet de 300 Km pour une onde radioélectrique et permet des mesures de distance modulo de 300 Km. La durée de 1 microseconde de chacun de ses éléments binaires autorise une précision de l'ordre de 0,1 microsecondes. L'ambiguïté des mesures de pseudo-distance obtenues à partir de la séquence binaire pseudo-aléatoire d'un code C/A due au fait que l'on affaire à des mesures modulo 300 Km est facile à lever dès que le récepteur reçoit plus de quatre satellites car il peut alors faire un contrôle de cohérence et ne retenir que la solution cohérente. En l'absence d'une telle possibilité, l'ambiguïté peut être aussi levée à l'aide d'une connaissance préalable très grossière de la position. Une telle ambiguïté de mesure ne se pose pas avec les signaux de satellite du type P du système GPS qui utilisent pour leur étalement une séquence binaire pseudo-aléatoire cryptée non répétée mais ces signaux ne sont pas à la libre disposition des utilisateurs.

Les retards apparents des porteuses d'émission sont accessibles, modulo les périodes de ces porteuses, par les phases locales produites par les boucles de phase de porteuse PLL et pilotant les générateurs de porteuses locales. On parle de mesures de phase. Ces mesures sont très précises mais très ambiguës. Dans le cas du système GPS, les signaux accessible au public utilisent une porteuse à 1,575 GHz permettant des mesures de pseudo-distance modulo 0.19 m donc très ambiguës, puisque la distance aux satellites est de l'ordre de 20.000 Km.

Certains systèmes de navigation par satellite utilisent des paires de signaux de fréquence porteuse proches de façon à pouvoir les utiliser de manière cohérente et ainsi améliorer la précision des mesures de position, du fait d'un spectre plus étendu. WO 03/054 57 divulgue un récepteur de positionement par satellite qui effectue un traitement combiné de deux porteuses de signal separées en fréquence.

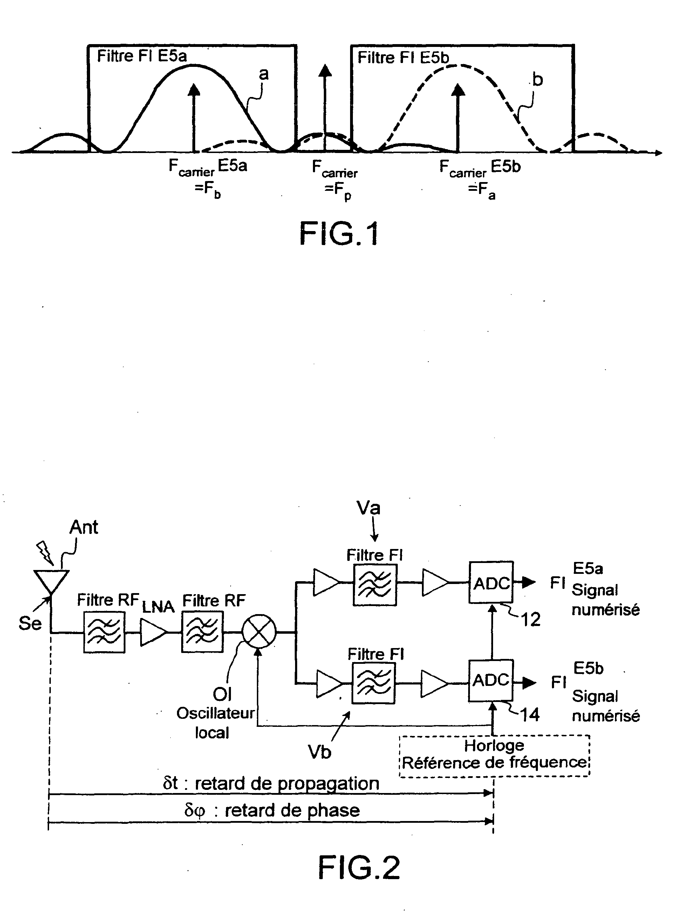

La figure 1 représente les spectres d'une paire de signaux émis par un satellite. Chaque satellite émet deux signaux a et b constitués chacun d'une porteuse modulée par un code pseudo-aléatoire qui étale le spectre. Les deux signaux, dans cet exemple E5a (signal a) et E5b (signal b) ayant des fréquences de porteuses différentes mais proches, sont émis de façon synchrone, les relations entre les phases des deux porteuses et des deux codes d'étalement à l'émission étant connues à tout instant.

Par la suite, il sera convenu des notations et définitions suivantes :

La fréquence de porteuse centrale est par définition la fréquence située au milieu des deux fréquences porteuses (par exemple E5a et E5b).

La fréquence de sous-porteuse est par définition la distance entre la fréquence de porteuse du signal a ou b et la fréquence de porteuse centrale (où $F_b - F_p = F_p - F_a$)

Notations :

| | | |
|---|---|---|
| $F_p$ | Fréquence de porteuse centrale | $F_p = (F_a + F_b)/2$ |
| $F_{sp}$ | Fréquence de sous-porteuse | $F_{sp} = (F_b - F_a)/2$ |
| $F_a$ | Fréquence de porteuse E5a | $F_a = F_p - F_{sp}$ |
| $F_b$ | Fréquence de porteuse E5b | $F_b = F_p + F_{sp}$ |
| $F_c$ | Fréquence du code | |

| | | |
|---|---|---|
| $\omega_p = 2\pi \cdot F_p$ | Pulsation de porteuse centrale | $\omega_p = (\omega_a + \omega_b)/2$ |
| $\omega_{sp} = 2\pi \cdot F_{sp}$ | Pulsation de sous-porteuse | $\omega_{sp} = (\omega_b - \omega_a)/2$ |
| $\omega_a = 2\pi \cdot F_a$ | Pulsation de porteuse E5a | $\omega_a = \omega_p - \omega_{sp}$ |
| $\omega_b = 2\pi \cdot F_b$ | Pulsation de porteuse E5b | $\omega_b = \omega_p + \omega_{sp}$ |

| | |
|---|---|
| $\lambda_p = 2\pi / F_p$ | Longueur d'onde de la porteuse centrale |
| $\lambda_{sp} = 2\pi / F_{sp}$ | Longueur d'onde de la sous-porteuse |
| $\lambda_a = 2\pi / F_a$ | Longueur d'onde de la porteuse E5a |
| $\lambda_b = 2\pi / F_b$ | Longueur d'onde de la porteuse E5b |
| $\lambda_{code} = 1/ Fc$ | Longueur d'onde du code |

Dans la suite du document on écrira expi($\theta$) pour $e^{j\theta}$ où $j^2 = -1$

Dans le cas de services bi-fréquences, les deux signaux dans le récepteur peuvent être poursuivis indépendamment sur chaque bande par des boucles de poursuite PLL et DLL. Les mesures de pseudo-distance, qui reposent sur les retards constatés par les boucles de code, sont limitées en précision par la largeur de chaque bande disponible. Du fait de l'indépèndance des boucles de poursuite, toute utilisation conjointe des mesures issues de signaux de largeurs de bande différentes, conduira à une précision limitée par la moins bonne des deux poursuites.

Il est cependant possible d'améliorer la précision des mesures de pseudo-distance dans le cadre d'un service bi-fréquence, à signaux synchrones de navigation, en combinant les signaux reçus sur les deux fréquences pour bénéficier d'une largeur de bande de fréquence équivalente plus importante.

La figure 2 montre les étages analogiques d'entrée d'un récepteur de position par satellite utilisant une paire de porteuse E5a, E5b telles que représentées à la figure 1. Les voies analogiques Va, Vb entre l'antenne et les convertisseurs numériques ADC 12, 14 en fréquence intermédiaire (FI) ont des éléments distincts entre les deux signaux reçus S1 et S2, ce qui entraîne des différentiels de retard de propagation et de phase.

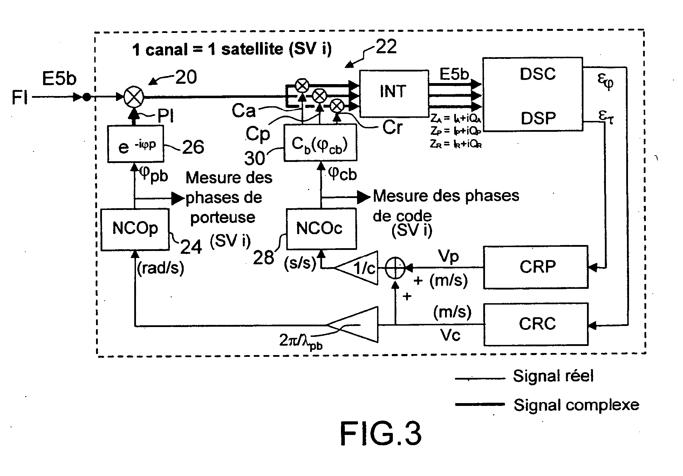

La figure 3 montre un des deux étages numériques identiques d'un récepteur de positionnement par satellite de l'état de l'art attaqué par une des deux composantes numérisées E5a ou E5b en fréquence intermédiaire (FI) en sortie de l'étage analogique de la figure 2. Chaque étage numérique comporte un circuit de corrélation de porteuse 20 suivi d'un circuit de corrélation de code 22.

Pour chaque signal satellite (E5a ou E5b) on réalise un traitement suivant l'état de l'art avec une boucle de phase de porteuse et une boucle de code. Pour cela on génère une porteuse locale PI et des codes locaux Ca, Cp, Cr pour démoduler le signal par corrélation. On parle de canal de poursuite.

On asservit la phase de la porteuse locale PI et la position des codes locaux en phase avec le signal reçu grâce aux boucles de poursuite de chaque canal. Chaque boucle de poursuite comporte, pour la boucle de porteuse un discriminateur de porteuse DSP, un correcteur de porteuse CRP contrôlant un oscillateur NCOp 24 de porteuse générant une phase locale de porteuse pilotant un générateur de porteuse 26 fournissant la porteuse locale pour le circuit de corrélation de porteuse et, pour la boucle de code, un discriminateur de code DSC, un correcteur de code CRC contrôlant un oscillateur NCOc 28 de code générant une phase locale de code pilotant le générateur de code 30 générant les codes locaux Ca, Cp, Cr (avance, ponctuel et retard) pour le circuit de corrélation de code.

Les discriminateurs de code et de phase de porteuse permettent de mesurer en sortie des corrélateurs après intégration par les intégrateurs INT les écarts de phase de porteuse et de code entre le signal reçu et le signal local, pour rétro-action dans les boucles de poursuite.

La boucle de phase de porteuse aide la boucle de code pilotant l'oscillateur local de code NCOc afin de réduire le traînage de la boucle dû à la dynamique, ce qui permet de réduire la bande de boucle de code et donc le bruit sur la phase du code mesurée.

On réalise ce traitement en parallèle pour chaque signal d'un satellite (soit un canal par signal satellite). Les codes différents et décorrélés d'un satellite à l'autre permettent de dissocier les signaux entre les satellites et donc d'allouer un canal à un satellite.

Les mesures sont les phases de la porteuse locale $\varphi_{pb}$ (rad) et du code local $\varphi_{cb}$ (s) pour chaque canal.

Les oscillateurs contrôlés numériquement NCOp ou NCOc ont le rôle de produire les phases des signaux locaux à haute cadence (> 10 MHz) à partir dés commandes en vitesse de phase élaborées par le logiciel de traitement de signal à basse cadence (< 1 KHz)

Les intégrateurs INT ont le rôle de produire les échantillons de signal démodulé, désétalé, cumulé $Z_A$, $Z_P$, $Z_R$ (avance, ponctuel et retard) à basse cadence (< 1 KHz) pour le logiciel de traitement de signal à partir des produits en sortie des démodulateurs de code élaborées à haute cadence (> 10 MHz).

On désigne par démodulateur de code le multiplicateur entre le signal reçu démodulé en porteuse, complexe, et un code local. Le produit résultant, complexe, est le signal reçu démodulé désétalé.

On désigne par corrélateur complexe l'ensemble formé par un démodulateur de code et un intégrateur (INT) avec remise à zéro périodique (Integrate & Dump). Ici nous avons trois corrélateurs complexes produisant $Z_A$, $Z_P$, $A_R$.

Le traitement des deux signaux S1 et S2 (par exemple E5a et E5b) au niveau des étages d'entrée du récepteur dans des voies analogiques distinctes introduisent des temps de propagations et des retards de phases différents sur les deux porteuses (qu'on nommera par la suite différentiels de retard et différentiels de phase) ce qui fait perdre la cohérence entre les deux composantes et a pour effet de réduire la précision des mesures du récepteur (les signaux ne peuvent plus se sommer de manière constructive) et de biaiser les mesures.

L'idée est de compenser les défauts introduits sur les signaux reçus par les voies analogiques au niveau du traitement numérique du signal, par une calibration effectuée grâce aux signaux reçus des satellites eux-mêmes, en moyennant et en filtrant les mesures pour réduire les erreurs de calibration.

A cet effet, l'invention propose un récepteur de positionnement par satellites comportant au moins un canal de réception (R1, R2,...Ri,...RN), chaque canal de réception étant destiné à effectuer un traitement combiné d'un premier S1 et d'un second S2 signaux radioélectriques émis par un même satellite et séparés en fréquence, les signaux étant reçus par des voies analogiques du récepteur puis numérisés pour être traités dans des voies de réception numériques, **caractérisé en ce que** chaque canal de réception comporte :

- un premier et un second circuits de corrélation recevant respectivement le premier et le second signaux reçus numérisés, chaque circuit de corrélation ayant, une voie de corrélation de porteuse entre le respectif signal reçu et une respective porteuse locale complexe (Lp1, Lp2), des voies de corrélation de code entre le signal reçu corrélé en sortie des voies de corrélation dé porteuse et des respectifs codes locaux, un intégrateur par voie de corrélation de code, le récepteur comportant en outre

- des discriminateurs de phase de porteuse et de code, les discriminateurs étant communs aux deux circuits de corrélation et fournissant, à partir des signaux en sortie des intégrateurs des deux circuits de corrélation, d'une part, après un correcteur de boucle de code, un signal de vitesse de sous-porteuse et de code (Vc) et, d'autre part, après un correcteur de boucle de porteuse, un signal de vitesse de porteuse centrale (Vp).
- un générateur de codes locaux par voie de corrélation de code, chaque générateur de code étant piloté par un signal de phase locale de code en sortie d'au moins un oscillateur à commande numérique NCOc de code commandé par le signal de vitesse de sous-porteuse (ou vitesse de code), les codes locaux fournis par chaque générateur de codes étant décalés d'une correction de retard différentiel positive $+\Delta\tau_{cal}$ pour un des circuits de corrélation et, d'une correction de retard différentiel négative $-\Delta\tau_{cal}$ pour l'autre, ces corrections tendant à compenser le différentiel de retard entre les deux signaux reçus dans les voies analogiques du canal de réception ;
- un générateur de porteuse locale complexe par voie de corrélation de porteuse, chaque générateur de porteuse locale étant piloté par un signal de phase locale de porteuse en sortie d'au moins un oscillateur à commande numérique NCOp de porteuse commandé par un signal de vitesse de porteuse centrale.

Dans l'invention, on construit une seule boucle de porteuse et une seule boucle de code pour traiter les deux signaux reçus S1, S2.

Dans une amélioration du récepteur selon l'invention, le récepteur comporte, en outre, un dispositif de correction de différentiel de phase $\Delta\varphi_{cal}$ tendant à compenser le différentiel de phase entre les deux signaux reçus se produisant dans les voies analogiques du canal de réception ;

Dans une première réalisation de principe du récepteur selon l'invention, chaque canal de réception comporte en outre :

- une voie de corrélation de sous-porteuse par signal reçu avec des sous-porteuses locales complexes générées par un respectif générateur de sous-porteuse piloté par un signal de phase locale de sous-porteuse en sortie de oscillateur à commande numérique NCOc de code, chaque voie de corrélation de sous-porteuse recevant les signaux corrélés de sa respective voie de corrélation de porteuse et fournissant des signaux de corrélation de sous-porteuse à sa respective voie de corrélation de code, le signal de phase locale de sous-porteuse étant décalé de la phase différentielle $\Delta\varphi_{cal}$ tendant à compenser le différentiel de phase entre les deux signaux reçus se produisant dans les voies analogiques du canal de réception.

La boucle de porteuse asservit la phase de la porteuse centrale locale, image de la moyenne des phases des deux porteuses locales, avec la phase de la porteuse centrale des signaux reçus, image de la moyenne des phases de porteuse des deux signaux reçues.

La boucle de code (ou boucle de sous-porteuse) asservit simultanément la phase de la sous-porteuse locale, image de l'écart de phase entre les porteuses des deux porteuses locales, avec la phase de la sous-porteuse reçue, image de l'écart de phase entre les deux signaux reçus, et la position des codes locaux avec celle les codes reçus. En effet la sous-porteuse reçue reste en phase avec le code reçue au pied de l'antenne, car ils subissent le même retard de groupe. Le discriminateur de la boucle de code et sous-porteuse utilise bien la sortie des intégrateurs des voies de corrélation avance, ponctuel et retard.

Le décalage induit par les voies analogiques distinctes du canal de réception doit être corrigé et à cet effet le récepteur, selon l'invention, comporte en outre un dispositif de calibration fournissant, à partir des valeurs des différentiels de phase et de retard (différentiels dus aux voies analogiques distinctes entre les deux signaux) estimées par les différents canaux du récepteur, les valeurs des corrections de différentiel de phase $\Delta\varphi_{cal}$ et de différentiel de retard $\Delta\tau_{cal}$ à appliquer en sortie des oscillateurs à commande numérique NCO de porteuse (ou sous-porteuse) et de code, communes à tous les canaux.

Dans une autre réalisation pratique du récepteur selon l'invention comportant N canaux de réception (R1, R2, ...RN), chaque canal de réception comporte un NCOc de code pour chaque composante du signal S1 et S2 et les respectives corrections de retard différentiels, positive $+\Delta\tau_{cal}$ et négative $-\Delta\tau_{cal}$, sont effectuées par application aux entrées des NCOc de code de respectifs signaux de correction $+d\Delta\tau_{cal}/dt$ et $-d\Delta\tau_{cal}/dt$ dérivée du signal de retard différentiel $+\Delta\tau_{cal}$ et $-\Delta\tau_{cal}$ par rapport au temps t, et en ce qu'on ajoute en sortie des oscillateurs à commande numérique NCOc de code une respective correction $+\Delta\tau_{0i}$ et $-\Delta\tau_{0i}$ propre à chaque canal i qui dépend de l'état initial des oscillateurs NCOc de code au moment où le canal de réception commence la poursuite en mode cohérent du signal.

Le récepteur peut comporter en outre un dispositif de correction de différentiel de phase $\Delta\varphi_{cal}$ recevant d'une part, un signal de correction de phase différentielle $\Delta\varphi_{cal}$, d'autre part les signaux en sortie des intégrateurs des deux circuits de corrélation de code et fournissant au discriminateurs des signaux comportant la compensation de différentiel de phase $\Delta\varphi_{cal}$.

Cette réalisation du récepteur selon l'invention permet de conserver l'architecture matérielle utilisée dans le cas d'une poursuite indépendante des signaux S1 et S2 (suivant l'état de l'art), ainsi il est facile d'initialiser la poursuite en commençant par une phase de convergence suivant ce mode.

L'invention sera mieux comprise à l'aide d'exemples de réalisations du récepteur selon l'invention, en référence aux dessins annexés, dans lesquels :

- la figure 1, déjà décrite, représente les spectres d'une paire de signaux émis par un satellite ;
- la figure 2 déjà décrite, montre les étages analogiques d'entrée d'un récepteur de position par satellite ;
- la figure 3 montre un des deux étages numériques identiques d'un récepteur de positionnement par satellite suivant l'état de l'art ;
- la figure 4 représente un schéma de principe d'un récepteur selon l'invention effectuant un traitement combiné d'un premier et d'un second signaux radioélectriques reçus ;
- la figure 5 montre un dispositif de détermination des différentiels de phase et de retard du récepteur selon l'invention ;
- les figures 6, 7 et 8 montrent des fonctions d'autocorrélation du récepteur selon l'invention ;
- la figure 9 représente une réalisation pratique d'un canal de réception du récepteur selon l'invention.

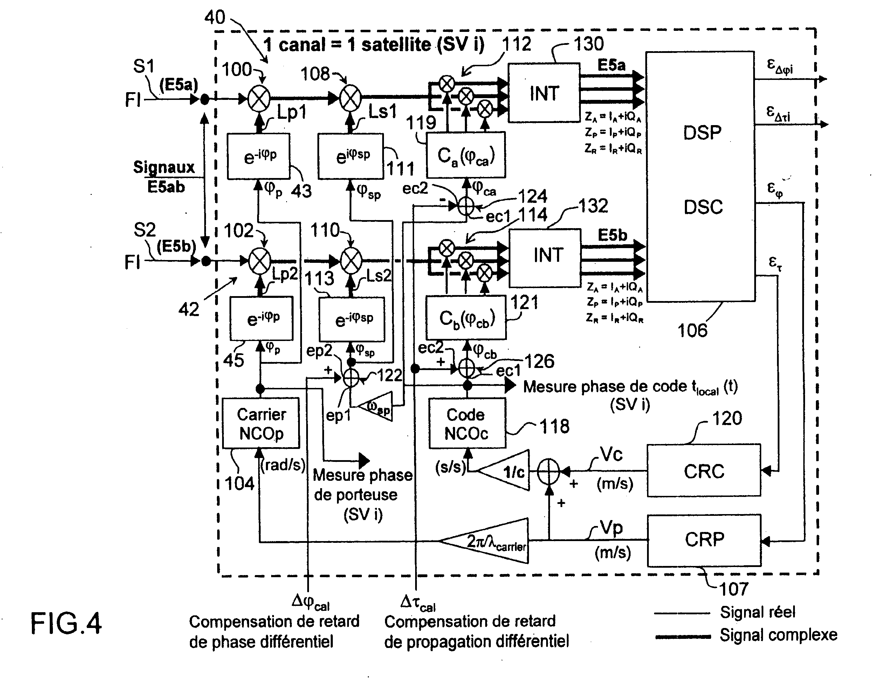

La figure 4 représente un schéma de principe d'un canal de réception du récepteur selon l'invention effectuant un traitement combiné d'un premier S1 et d'un second S2 signaux radioélectriques reçus.

Le canal de réception de la figure 4 comporte le premier circuit de corrélation 40 attaqué par un premier signal reçu S1 et le second circuit de corrélation 42 attaqué par le second signal reçu S2, chaque circuit de corrélation comportant une voie de corrélation de porteuse centrale 100, 102 entre son respectif signal reçu S1, S2 et deux respectives porteuses locales complexes Lp1 pour la première voie de corrélation 100 et Lp2 pour la deuxième voie 102.

Les porteuses locales complexes sont générées par un respectif générateur de porteuse locale 43, 45 piloté par un signal de phase locale $\varphi_p$ en sortie d'un oscillateur commun à commande numérique NCOp 104 de porteuse centrale contrôlé par le signal de vitesse de porteuse Vp en sortie d'un circuit de discriminateurs (106) de phase de porteuse centrale DSP à travers un correcteur de phase de porteuse centrale CRP (107).

Les signaux en sortie des voies de corrélation de porteuse centrale sont appliqués à des voies de corrélation de sous-porteuse 108, 110 avec des respectives sous-porteuses locales Ls1, pour la première voie de corrélation de sous-porteuse et Ls2 pour l'autre voie de corrélation, puis aux voies de corrélation de code 112, 114.

Les sous-porteuse locales Ls1 et Ls2 sont générées par un par un respectif générateur de sous-porteuse locale 111, 113 piloté par un signal de phase locale sous-porteuse $\varphi_{sp}$ en sortie d'un oscillateur commun à commande numérique NCOc de locale de sous-porteuse et de code 118.

L'oscillateur de code NCOc 118 est commandé par un signal de vitesse de code Vc en sortie d'un discriminateur de phase de code DSC du circuit des discriminateurs 106 à travers un correcteur de phase de code CRC 120.

Un sommateur de phase de sous-porteuse 122 reçoit à une entrée ep1 la phase de sous-porteuse en sortie de l'oscillateur de code NCOc 118 et à une autre entrée ep2 une correction de différentielle de phase $\Delta\varphi_{cal}$ tendant à compenser le différentiel de phase entre les deux signaux reçus se produisant dans les voie analogiques du récepteur, le sommateur de phase de sous porteuse 122 fournissant, à sa sortie, un signal de phase locale des sous-porteuses décalées en phase pour attaquer le générateur de sous-porteuse des voie de corrélation de sous-porteuse.

Les signaux en sortie des voies de corrélation de sous-porteuse 108, 110 sont ensuite corrélés dans les respectives voies de corrélation de code 112, 114 avec les respectifs codes locaux fournis par les respectifs générateurs de code local 119, 121 pour la voie de signal S1 et la voie de signal S2.

Les générateurs de codes locaux 119, 121 sont pilotés par un respectif signal de phase de code $\varphi_{CA}$, $\varphi_{CB}$ en sortie de l'oscillateur de code commun NCOc 118, commandé par le signal de vitesse de sous-porteuse (ou de code) Vc, à travers, un premier sommateur de code local 124 recevant à une entrée ec1 la phase du code local en sortie de l'oscillateur de code local et à une autre entrée ec2 une correction de retard différentiel $-\Delta\tau_{cal}$ tendant à compenser le retard différentiel, le premier sommateur 124 fournissant à sa sortie une phase de code local décalée pour piloter le générateur de codes local 119 de la voie de signal S1 et, un second sommateur de code local 126 recevant à une entrée ec1 la phase du code local en sortie de l'oscillateur de code local NCOc et à une autre entrée ec2 une correction de retard différentiel $+\Delta\tau_{cal}$ tendant à compenser le retard différentiel, le second sommateur 126 de code local fournissant à sa sortie une phase de code local décalée pour piloter le générateur de code local 118 de la voie de signal S2.

Comme dans le récepteur de la figure 3, les signaux en sortie des voies de corrélation de code sont ensuite intégrés par des respectifs intégrateurs de code INT 130, 132 pour fournir des signaux attaquant les discriminateurs 106 de porteuse DSP et de code DSC du récepteur.

La correction du différentiel de phase $\Delta\varphi_{cal}$ et du différentiel de retard $\Delta\tau_{cal}$ est commune à tous les canaux utilisés pour la réception des signaux émis par les satellites eux-mêmes

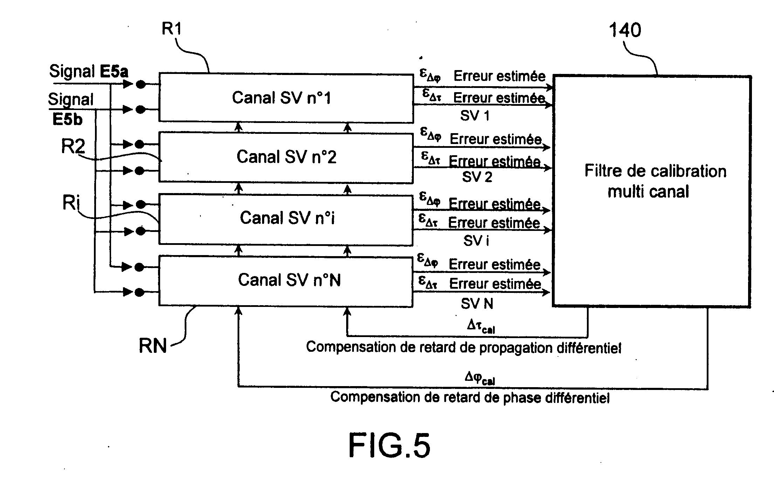

La figure 5 montre un dispositif de détermination de retard différentiel de propagation $\Delta\tau_{cal}$ et du retard différentiel de phase $\Delta\varphi_{cal}$ du récepteur de positionnement par satellite, selon l'invention, à partir des satellites reçus.

Les paires de fréquences reçues des satellites, par exemple les porteuses E5a et E5b, sont appliquées à N canaux de réception bi-fréquences R1, R2,...Ri .. RN de même type que celui décrit à la figure 4.

Chaque canal récepteur bi-fréquences fournit à un filtre de calibration multicanaux 140 les valeurs estimées de l'erreur de correction (ou calibration) du différentiel de phase $\varepsilon_{\Delta\varphi i}$ et de l'erreur de correction (ou calibration) du différentiel de retard $\varepsilon_{\Delta\tau i}$, qui calcule les corrections de différentiel de phase $\Delta\varphi_{cal}$ et de différentiel de retard $\Delta\tau_{cal}$ qui seront appliqués aux sommateurs de phase de sous-porteuse et de code local en sortie des NCO, pour tous les canaux.

Chaque canal applique en sortie des corrélateurs des discriminateurs qui permettent d'identifier séparément les défauts d'asservissement des boucles de poursuite et les défauts de calibration. Ces défauts de calibration estimés par chaque canal $\varepsilon_{\Delta\varphi i}$ et $\varepsilon_{\Delta\tau i}$, (i étant le rang du canal) entachés d'erreurs propres aux canaux, alimentent un filtre de calibration multicanaux 140 dont le rôle est de moyenner entre les canaux et de filtrer dans le temps ces mesures pour remettre à jour les corrections $\Delta\varphi_{cal}$ et $\Delta\tau_{cal}$, en minimisant l'impact des erreurs de mesure sur la précision de la calibration.

Nous allons par la suite définir l'expression des signaux aux différents étages du récepteur selon l'invention et à cet effet on défini les signaux reçus au niveau de la numérisation des signaux par les expressions suivantes :

1 - Signaux reçus :

1.a - Forme physique des signaux reçus :

$$S_{a\,reçu} = A \cdot \cos(\varphi_{a\,reçu}(t) + \delta\varphi_a) \cdot C_a(t_{reçu}(t) + \delta t_a) \cdot D_a(t_{reçu}(t))$$

$$S_{b\,reçu} = A \cdot \cos(\varphi_{b\,reçu}(t) + \delta\varphi_b) \cdot C_b(t_{reçu}(t) + \delta t_b) \cdot D_b(t_{reçu}(t))$$

1.b - Temps reçu :

$t_{reçu}(t)$ : Temps auquel a été émis par le satellite le signal reçu par le récepteur à l'instant t (au pied de l'antenne)
$t_{propagation}(t)$ : Temps de propagation entre le satellite et l'antenne du récepteur $t_{reçu}(t) = t - t_{propagation}(t)$

1.c - Phases de porteuse reçues :

$\varphi_{a\,reçu}(t)$ Phase du signal reçu à l'instant t (au pied de l'antenne) sur E5a
$\varphi_{b\,reçu}(t)$ Phase du signal reçu à l'instant t (au pied de l'antenne) sur E5b
$\delta\varphi_a$ : Retard de phase sur la voie E5a dû au récepteur[*]
$\delta\varphi_b$ : Retard de phase sur la voie E5b dû au récepteur[*]

$$\varphi_{p\,reçu}(t) = \omega_p \cdot t_{reçu}(t) + \varphi_{div}(t)$$

$$\varphi_{a\,reçu}(t) = \omega_a \cdot t_{reçu}(t) + \varphi_{div}(t)$$

$$\varphi_{a\,reçu}(t) = \omega_p \cdot t_{reçu}(t) - \omega_{sp} \cdot t_{reçu}(t) + \varphi_{div}(t)$$

$$\varphi_{a\ reçu}(t)\ =\ \ \varphi_{p\ reçu}(t)\ -\ \omega_{sp}.t_{reçu}(t)$$

$$\varphi_{b\ reçu}(t)\ =\ \omega_{b}.t_{reçu}(t)\ \ \ \ \ \ \ \ \ \ \ \ +\ \varphi_{div}(t)$$

$$\varphi_{b\ reçu}(t)\ =\ \omega_{p}.t_{reçu}(t)\ +\ \omega_{sp}.t_{reçu}(t)\ +\ \varphi_{div}(t)$$

$$\varphi_{b\ reçu}(t)\ =\ \ \varphi_{p\ reçu}(t)\ +\ \omega_{sp}.t_{reçu}(t)$$

$\varphi_{div}(t)$ : divergence entre la phase de la porteuse et le retard de groupe dû à l'ionosphère, qui justifie l'utilisation de boucles de code et de porteuse distinctes.

1.d - Codes d'étalement :

$C_a(t)$ : Code d'étalement émis par le satellite à l'instant t sur E5a
$C_b(t)$ : Code d'étalement émis par le satellite à l'instant t sur E5b
$C_a(\ t_{reçu}(t)\ )$ : Code d'étalement sur E5a reçu par le récepteur à l'instant t (au pied de l'antenne)
$C_b(\ t_{reçu}(t)\ )$ : Code d'étalement sur E5b reçu par le récepteur à l'instant t (au pied de l'antenne)
$\delta t_a$ : Retard de groupe sur la voie E5a dû au récepteur [*]
$\delta t_b$ : Retard de groupe sur la voie E5b dû au récepteur [*]

(*) Traitement analogique entre le pied de l'antenne et le convertisseur analogique / numérique

1.e - Données :

$D_a(\ t_{reçu}(t)\ )$ : Données reçues à l'instant t sur le signal E5a
$D_b(\ t_{reçu}(t)\ )$ : Données reçues à l'instant t sur le signal E5b

Dans le cas où le signal dispose d'une voie pilote (c.a.d. sans données) on utilise cette voie (distinguée de la voie de données par le code d'étalement décorrélé).

1.f - Nouvelle expression des signaux reçus :

$$S_{a\ reçu} = A\ .\ \cos(\ \varphi_{p\ reçu}(t)\ -\ \omega_{sp}.t_{reçu}(t)\ +\ \delta\varphi_a\ )\ .\ C_a(\ t_{reçu}(t)\ +\ \delta t_a\ )\ .\ D(\ t_{reçu}(t)\ )$$

$$S_{b\ reçu} = A\ .\ \cos(\ \varphi_{p\ reçu}(t)\ +\ \omega_{sp}.t_{reçu}(t)\ +\ \delta\varphi_b\ )\ .\ C_b(\ t_{reçu}(t)\ +\ \delta t_b\ )\ .\ D(\ t_{reçu}(t)\ )$$

2 - Signaux locaux :

On génère des signaux locaux que l'on corrèle avec le signal reçu.
La corrélation se fait séparément pour la porteuse locale et le code locale. Cependant cela est mathématiquement équivalent à corréler le signal reçu avec le produit de la porteuse locale et du code local (produit appelé signal local).

2.a - Expression de la forme physique des signaux locaux :

$$S_{a\ local\ avance} = A \cdot expi(-\varphi_p(t)) \cdot expi(+\varphi_{sp}(t)) \cdot C_a(\varphi_{ca}(t) + d)$$

$$S_{a\ local\ ponctuel} = A \cdot expi(-\varphi_p(t)) \cdot expi(+\varphi_{sp}(t)) \cdot C_a(\varphi_{ca}(t)\ \ )$$

$$S_{a\ local\ retard} = A \cdot expi(-\varphi_p(t)) \cdot expi(+\varphi_{sp}(t)) \cdot C_a(\varphi_{ca}(t) - d)$$

$$S_{b\ local\ avance} = A \cdot expi(-\varphi_p(t)) \cdot expi(-\varphi_{sp}(t)) \cdot C_b(\varphi_{cb}(t) + d)$$

$$S_{b\ local\ ponctuel} = A \cdot expi(-\varphi_p(t)) \cdot expi(-\varphi_{sp}(t)) \cdot C_b(\varphi_{cb}(t)\ \ )$$

$$S_{b\ local\ retard} = A \cdot expi(-\varphi_p(t)) \cdot expi(-\varphi_{sp}(t)) \cdot C_b(\varphi_{cb}(t) - d)$$

$expi(-\varphi_p(t))$ : Porteuse centrale, complexe (conjuguée)
$expi(-\varphi_{sp}(t))$ : Sous-porteuse locale, complexe (conjuguée)
$C_a(\varphi_{ca}(t)+\varepsilon.d)$ : Code locaux avance, ponctuel, retard ($\varepsilon$ =-1,0,1) voie a, réels
$C_b(\varphi_{cb}(t)+\varepsilon.d)$ : Code locaux avance, ponctuel, retard ($\varepsilon$ =-1,0,1) voie b, réels

Notation : $expi(\theta) = e^{j\theta}$ où $j^2 = -1$

| | | |
|---|---|---|
| $\varphi_p(t)$ : | Phase de la porteuse centrale locale | (rad) |
| $\varphi_{sp}(t)$ : | Phase de la sous-porteuse locale | (rad) |
| $\varphi_{ca}(t)$: | Phase du code local sur la voie a | (s) |
| $\varphi_{cb}(t)$ : | Phase du code local sur la voie b | (s) |

1.b - Relation entre temps reçu estimé et phase locales des codes :

$t_{reçu\ estimé}(t)$ Temps reçu estimé en sortie du NCO code

$$\varphi_{sp}(t) = \omega_{sp} \cdot t_{reçu\ estimé}(t) + \Delta\varphi_{cal}$$

$$\varphi_{ca}(t) = \qquad t_{reçu\ estimé}(t) - \Delta\tau_{cal}$$

$$\varphi_{cb}(t) = \qquad t_{reçu\ estimé}(t) + \Delta\tau_{cal}$$

1.c - Relation entre temps reçu et temps reçu estimé :

$\varphi$ : Déphasage entre la phase locale et la phase reçu de la porteuse centrale
$\tau$ : Retard du temps reçu estimé par rapport au temps reçu vrai

$$\varphi_P(t) = \varphi_{p\ reçu}(t) - \varphi$$

$$t_{reçu\ estimé}(t) = t_{reçu}(t) - \tau$$

1.d - Nouvelle expression des signaux locaux :

$$S_{a\ local\ ponctuel} = A \cdot \exp i\left( -\varphi_{p\ reçu}(t) + \varphi + \omega_{sp}.t_{reçu}(t) - \omega_{sp}.\tau + \Delta\varphi_{cal} \right) \cdot C_a\left( t_{reçu}(t) - \tau - \Delta\tau_{cal} \right)$$

$$S_{b\ local\ ponctuel} = A \cdot \exp i\left( -\varphi_{p\ reçu}(t) + \varphi - \omega_{sp}.t_{reçu}(t) + \omega_{sp}.\tau - \Delta\varphi_{cal} \right) \cdot C_b\left( t_{reçu}(t) - \tau + \Delta\tau_{cal} \right)$$

3 - Sortie des corrélateurs : (blocs « Integrate and Dump »)

$$Z_P = {}^1\!/_T \int_{[nT,\ (n+1)T]} S_{reçu}(t) \cdot S_{local\ ponctuel}(t)\ dt \qquad \text{(Voie ponctuelle)}$$

$$Z_A = {}^1\!/_T \int_{[nT,\ (n+1)T]} S_{reçu}(t) \cdot S_{local\ avance}(t)\ dt \qquad \text{(Voie avance)}$$

$$Z_R = {}^1\!/_T \int_{[nT,\ (n+1)T]} S_{reçu}(t) \cdot S_{local\ retard}(t)\ dt \qquad \text{(Voie retard)}$$

$$Z_{P\ a} = \tfrac{1}{2}A \cdot \exp i\left( \varphi - \omega_{sp}.\tau + \Delta\varphi_{cal} + \delta\varphi_a \right) \cdot R\left( \tau + \Delta\tau_{cal} + \delta t_a \right)$$

$$Z_{P\ b} = \tfrac{1}{2}A \cdot \exp i\left( \varphi + \omega_{sp}.\tau - \Delta\varphi_{cal} + \delta\varphi_b \right) \cdot R\left( \tau - \Delta\tau_{cal} + \delta t_b \right)$$

$$Z_{A\ a} = \tfrac{1}{2}A \cdot \exp i\left( \varphi - \omega_{sp}.\tau + \Delta\varphi_{cal} + \delta\varphi_a \right) \cdot R\left( \tau + \Delta\tau_{cal} + \delta t_a - d \right)$$

$$Z_{A\,b} = \tfrac{1}{2}A \cdot \text{expi}(\,\varphi + \omega_{sp}.\tau - \Delta\varphi_{cal} + \delta\varphi_b\,) \cdot R(\,\tau - \Delta\tau_{cal} + \delta t_b - d\,)$$

$$Z_{R\,a} = \tfrac{1}{2}A \cdot \text{expi}(\,\varphi - \omega_{sp}.\tau + \Delta\varphi_{cal} + \delta\varphi_a\,) \cdot R(\,\tau + \Delta\tau_{cal} + \delta t_a + d\,)$$

$$Z_{R\,b} = \tfrac{1}{2}A \cdot \text{expi}(\,\varphi + \omega_{sp}.\tau - \Delta\varphi_{cal} + \delta\varphi_b\,) \cdot R(\,\tau - \Delta\tau_{cal} + \delta t_b + d\,)$$

( Notation : $(x+jy)^* = (x-jy)^*$ conjugué au sens des nombres complexes)

R : fonction d'autocorrélation du code d'étalement :

$$R(\,\tau\,) = {}^1\!/_T \int_{[nT,\,(n+1)T]} C_a(t) \cdot C_a(t-\tau)\,dt = {}^1\!/_T \int_{[nT,\,(n+1)T]} C_b(t) \cdot C_b(t-\tau)\,dt$$

R est symétrique : $R(\,\tau\,) = R(\,-\tau\,)$

4 - Asservissement idéal :

On se place dans un premier temps au point de fonctionnement idéal stabilisé en régime permanent, pour lequel l'asservissement maximise la puissance en sortie de la voie de corrélation ponctuelle, en phase.

En régime permanent on veut :

$$\varphi - \omega_{sp}.\tau - \Delta\varphi_{cal} + \delta\varphi_a = 0 \qquad \text{Pour redresser } Z_{P\,a} \text{ (partie imaginaire nulle)}$$

$$\varphi + \omega_{sp}.\tau + \Delta\varphi_{cal} + \delta\varphi_b = 0 \qquad \text{Pour redresser } Z_{P\,b} \text{ (partie imaginaire nulle)}$$

$$\tau - \Delta\tau_{cal} + \delta t_a = 0 \qquad \text{Pour maximiser } R(\,\tau - \Delta\tau_{cal} + \delta t_a\,)$$

$$\tau + \Delta\tau_{cal} + \delta t_b = 0 \qquad \text{Pour maximiser } R(\,\tau - \Delta\tau_{cal} + \delta t_b\,)$$

$$(R(\tau) \text{ est maximale pour } \tau = 0)$$

On a quatre équations et quatre inconnues : $\varphi$, $\tau$, $\Delta\varphi_{cal}$ et $\Delta\tau_{cal}$ Soit $\tau_0$, $\varphi_0$, $\Delta\tau_{cal\,0}$ et $\Delta\varphi_{cal\,0}$ les solutions du problème :

$$\tau_0 \quad = \quad (-\,\delta t_a - \delta t_b\,)/2$$

$$\Delta\tau_{cal\,0} = \quad (\,\delta t_a - \delta t_b\,)/2$$

$$\varphi_0 \quad = (-\,\delta\varphi_a - \delta\varphi_b\,)/2$$

$$\Delta\varphi_{cal\,0} = (\ \delta\varphi_a - \delta\varphi_b\ )/2 + \omega_{sp}.(\ \delta t_a + \delta t_b\ )/2$$

$$Z_{Pa} = \tfrac{1}{2}A.\,\mathrm{expi}\{((\varphi-\varphi_0)\ -\omega_{sp}.(\tau-\tau_0)\ -(\Delta\varphi_{cal}-\Delta\varphi_{cal\,0})\}.\,R\{(\tau\ \ -\tau_0)\ -(\Delta\tau_{cal}-\Delta\tau_{cal\,0})\}$$

$$Z_{Pb} = \tfrac{1}{2}A.\,\mathrm{expi}\{((\varphi-\varphi_0)\ +\omega_{sp}.(\tau-\tau_0)\ +(\Delta\varphi_{cal}-\Delta\varphi_{cal\,0})\}.\,R\{(\tau\ \ -\tau_0)\ +(\Delta\tau_{cal}-\Delta\tau_{cal\,0})\}$$

$$Z_{Aa} = \tfrac{1}{2}A.\,\mathrm{expi}\{((\varphi-\varphi_0)\ -\omega_{sp}.(\tau-\tau_0)\ -(\Delta\varphi_{cal}-\Delta\varphi_{cal\,0})\}.\,R\{(\tau+d\ -\tau_0)\ -(\Delta\tau_{cal}-\Delta\tau_{cal\,0})\}$$

$$Z_{Ab} = \tfrac{1}{2}A.\,\mathrm{expi}\{((\varphi-\varphi_0)\ +\omega_{sp}.(\tau-\tau_0)\ +(\Delta\varphi_{cal}-\Delta\varphi_{cal\,0})\}.\,R\{(\tau+d\ -\tau_0)\ +(\Delta\tau_{cal}-\Delta\tau_{cal\,0})\}$$

$$Z_{Ra} = \tfrac{1}{2}A.\,\mathrm{expi}\{((\varphi-\varphi_0)\ -\omega_{sp}.(\tau-\tau_0)\ -(\Delta\varphi_{cal}-\Delta\varphi_{cal\,0})\}.\,R\{(\tau-d\ -\tau_0)\ -(\Delta\tau_{cal}-\Delta\tau_{cal\,0})\}$$

$$Z_{Rb} = \tfrac{1}{2}A.\,\mathrm{expi}\{((\varphi-\varphi_0)\ +\omega_{sp}.(\tau-\tau_0)\ +(\Delta\varphi_{cal}-\Delta\varphi_{cal\,0})\}.\,R\{(\tau-d\ -\tau_0)\ +(\Delta\tau_{cal}-\Delta\tau_{cal\,0})\}$$

5 - Changement de variables :

| | | |
|---|---|---|
| $\varphi-\varphi_0$ | devient | $\varphi$ |
| $\tau-\tau_0$ devient | devient | $\tau$ |
| $\Delta\varphi_{cal}-\Delta\varphi_{cal\,0}$ | devient | $\Delta\varphi$ |
| $\Delta\tau_{cal}-\Delta\tau_{cal\,0}$ | devient | $\Delta\tau$ |

$$Z_{P\,a} = \tfrac{1}{2}A\,.\,\mathrm{expi}\{\ \varphi\ -\omega_{sp}.\tau\ -\Delta\varphi\ \}\,.\,R\{\ \tau\ \ -\Delta\tau\ \}$$

$$Z_{P\,b} = \tfrac{1}{2}A\,.\,\mathrm{expi}\{\ \varphi\ +\omega_{sp}.\tau\ +\Delta\varphi\ \}\,.\,R\{\ \tau\ \ +\Delta\tau\ \}$$

$$Z_{A\,a} = \tfrac{1}{2}A\,.\,\mathrm{expi}\{\ \varphi\ -\omega_{sp}.\tau\ -\Delta\varphi\ \}\,.\,R\{\ \tau+d\ -\Delta\tau\ \}$$

$$Z_{A\,b} = \tfrac{1}{2}A\,.\,\mathrm{expi}\{\ \varphi\ +\omega_{sp}.\tau\ +\Delta\varphi\ \}\,.\,R\{\ \tau+d\ +\Delta\tau\ \}$$

$$Z_{R\,a} = \tfrac{1}{2}A\,.\,\mathrm{expi}\{\ \varphi\ -\omega_{sp}.\tau\ -\Delta\varphi\ \}\,.\,R\{\ \tau-d\ -\Delta\tau\ \}$$

$$Z_{R\,b} = \tfrac{1}{2}A \; . \; expi\{ \; \varphi + \omega_{sp}.\tau + \Delta\varphi \; \} \; . \; R\{ \; \tau\text{-d} + \Delta\tau \; \}$$

6 - Voie a + b :

On cherche à sommer de manière cohérente les sorties des corrélateurs de voies a et b de manière à avoir le maximum de sensibilité vis-à-vis des erreurs de synchronisation des boucles de poursuite de code et de phase de porteuse.
Soit :

$$Z_P = \qquad\qquad Z_{P\,a} + \qquad\qquad Z_{P\,b}$$

$$Z_A = expi( - \omega_{sp}.d \; ) \; . \; Z_{A\,a} + expi( +\omega_{sp}.d \; ) \; . \; Z_{A\,b}$$

$$Z_R = expi( +\omega_{sp}.d \; ) \; . \; Z_{R\,a} + expi( - \omega_{sp}.d \; ) \; . \; Z_{R\,b}$$

NB : d est l'espacement entre les corrélateurs avance, ponctuel et retard.
*Si*

$$\Delta\tau = 0 :$$

$$Z_P = A \; . \; expi(\varphi) \; . \; cos\{ \; \omega_{sp}.\tau + \Delta\varphi \} \; . \; R(\tau)$$

*Si*

$$\Delta\tau = 0 \;\; et \;\; \Delta\varphi = 0 :$$

$$Z_P = A \; . \; expi(\varphi) \; . \; cos\{ \; \omega_{sp}.(\tau \;\;\;) \} \; . \; R(\tau \;\;\;) = \tfrac{1}{2}A \; . \; expi(\varphi) \; . \; R_{cos}(\tau \;\;\;)$$

$$Z_A = A \; . \; expi(\varphi) \; . \; cos\{ \; \omega_{sp}.(\tau+d) \} \; . \; R(\tau+d) = \tfrac{1}{2}A \; . \; expi(\varphi) \; . \; R_{cos}(\tau+d)$$

$$Z_R = A \; . \; expi(\varphi) \; . \; cos\{ \; \omega_{sp}.(\tau\,\text{-d}) \} \; . \; R(\tau\,\text{-d}) = \tfrac{1}{2}A \; . \; expi(\varphi) \; . \; R_{cos}(\tau\,\text{-d})$$

Avec

$$R_{cos}( \; \tau \; ) = cos( \; \omega_{sp}.\tau \; ) \; . \; R( \; \tau \; )$$

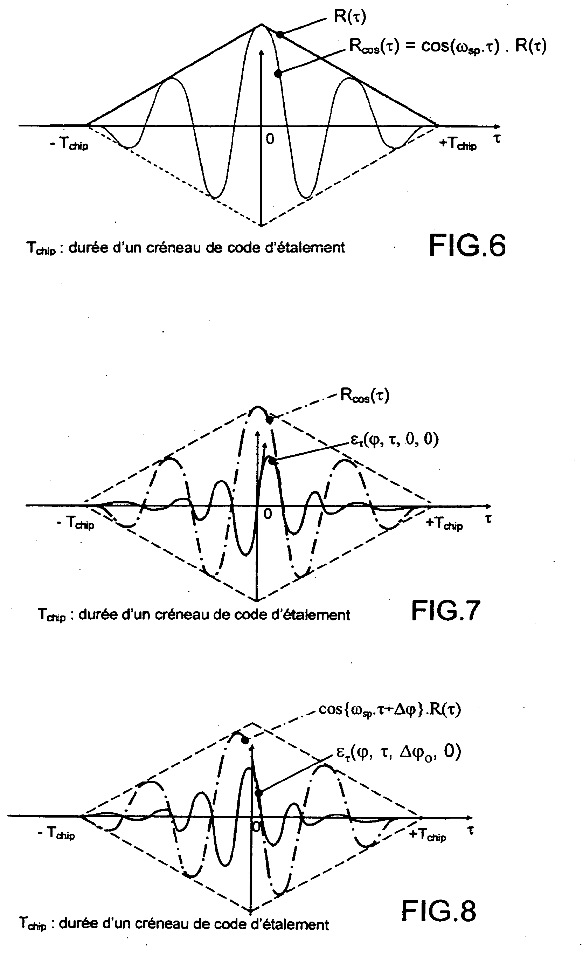

La figure 6 montre la fonction d'autocorrélation $R_{cos}( \; \tau \; )$.

On a un pic de la fonction d'autocorrélation beaucoup plus prononcé sur $R_{cos}$ que sur R, ce qui améliore sensiblement la précision de la mesure.

En outre on récupère le maximum d'amplitude sur la voie $Z_P$ ce qui rend plus précis et plus robuste l'asservissement de la phase de la porteuse.

Cela justifie l'objectif de maintenir $\Delta\tau$ et $\Delta\varphi$ à zéro, par le choix de discriminateurs dédiés détectant des valeurs non nulles sur $\Delta\tau$ et $\Delta\varphi$ et permettant une correction rétroactive par un filtre de calibration.

7 - Discriminateurs (pour chaque satellite reçu) :

| | | |
|---|---|---|
| Phase de porteuse centrale : | $\varepsilon_\varphi (\varphi, \tau, \Delta\varphi, \Delta\tau)$ | Estimation de $\varphi$ |
| Retard de code : | $\varepsilon_\varphi (\varphi, \tau, \Delta\varphi, \Delta\tau)$ | Estimation de $\tau$ |
| Différentiel de phase : | $\varepsilon_{\Delta\varphi} (\varphi, \tau, \Delta\varphi, \Delta\tau)$ | Estimation de $\Delta\varphi$ |
| Différentiel de groupe : | $\varepsilon_{\Delta\tau} (\varphi, \tau, \Delta\varphi, \Delta\tau)$ | Estimation de $\Delta\tau$ |

Le but des ces discriminateurs est d'estimer, chacun par une combinaison des sorties des 6 corrélateurs, les quantités $\varphi$, $\tau$, $\Delta\varphi$, $\Delta\tau$ (après changement de repère) qui indiquent ce qu'il manque respectivement sur $\varphi$, $\tau$, $\Delta\varphi_{cal}$, $\Delta\tau_{cal}$ (avant changement de repère) pour atteindre l'asservissement idéal donnant le maximum de précision et de robustesse sur les mesures de phase de porteuse centrale et de temps reçu. Cela permet par rétroaction de converger vers l'asservissement idéal.

L'objectif est que :

$$\varepsilon_\varphi (\varphi, \tau, 0, 0) \cong \varphi \quad \text{au premier ordre}$$
$$\varepsilon_\tau (\varphi, \tau, 0, 0) \cong \tau \quad \text{au premier ordre}$$

Et que :

$$\varepsilon_{\Delta\varphi} (\varphi, \tau, \Delta\varphi, 0) \cong \Delta\varphi \quad \text{au premier ordre}$$
$$\varepsilon_{\Delta\tau} (\varphi, \tau, 0, \Delta\tau) \cong \Delta\tau \quad \text{au premier ordre}$$

7.a - Discriminateur de phase :

$$\varepsilon_\varphi = \text{Arg}( Z_P ) = \text{Arg}( Z_{P\,a} + Z_{P\,b} ) = \arctan( I_{P\,a} + I_{P\,b} , Q_{P\,a} + Q_{P\,b} )$$

$$\varepsilon_\varphi (\varphi, \tau, \Delta\varphi, \Delta\tau) = \text{Arg}[ \text{expi}(\varphi) . R_{a+b}(\tau, \Delta\varphi, \Delta\tau) ]$$

$$\varepsilon_\varphi (\varphi, \tau, \Delta\varphi, \Delta\tau) = \varphi + \text{Arg}[ R_{a+b}(\tau, \Delta\varphi, \Delta\tau) ]$$

avec

$$R_{a+b}(\tau, \Delta\varphi, \Delta\tau) = \text{expi}( -\omega_{sp}.\tau - \Delta\varphi ) . R(\tau - \Delta\tau) + \text{expi}( \omega_{sp}.\tau + \Delta\varphi ) . R(\tau + \Delta\tau)$$

Si $\Delta\tau = 0$ on a bien:

$$\varepsilon_\varphi (\varphi, \tau, \Delta\varphi, 0) = \varphi$$

car $R_{a+b}(\tau, \Delta\varphi, 0) = \cos(\omega_{sp}.\tau + \Delta\varphi)$. $R(\tau)$ est une fonction réelle

Cependant si $\Delta\varphi \neq 0$ | $R_{a+b}(\tau, \Delta\varphi, 0)$ | $< R_{cos}(\tau)$ donc on perd de la précision sur $\varepsilon_\varphi$ d'où une moindre robustesse et la nécessité de maintenir $\Delta\varphi$ nul.

Si $\Delta\tau \neq 0$ on a :

$$R_{a+b}(\tau, \Delta\varphi, \Delta\tau)$$
$$= \cos(-\omega_{sp}.\tau - \Delta\varphi) \{ R(\tau-\Delta\tau) + R(\tau+\Delta\tau) \} + i.\sin(-\omega_{sp}.\tau - \Delta\varphi) \{ -R(\tau-\Delta\tau) + R(\tau+\Delta\tau) \}$$

$R_{a+b}(\tau, \Delta\varphi, \Delta\tau)$ n'est plus une fonction réelle

La mesure dépend de $\tau$ donc on a un couplage entre la mesure de code et de phase.

$$R_{a+b}(0, \Delta\varphi, \Delta\tau) = \cos(-\Delta\varphi) \{ R(-\Delta\tau) + R(+\Delta\tau) \} + i.\sin(-\Delta\varphi) \{ -R(-\Delta\tau) + R(+\Delta\tau) \}$$

$$R_{a+b}(0, \Delta\varphi, \Delta\tau) = 2 \cos(-\Delta\varphi) . R(\Delta\tau) \quad \text{si R est symétrique}$$

On a pas de biais pour $\tau = 0$

7.b - Discriminateur de code : le discriminateur de code utilise la sortie des voies de corrélation avance, ponctuelle et retard sur S1 et S2 (après calibration)

$$\varepsilon_\tau = Re[ (Z_A - Z_R) . Z_P^* ] / \mu \qquad ( \text{Re : partie réelle, * : conjugué})$$

$\mu$ : facteur de normalisation pour avoir une pente unitaire à l'origine

Si $\Delta\tau = 0$ et $\Delta\varphi = 0$ on a bien :

$$Z_A - Z_R = A . expi(\varphi) . [ R_{cos}(\tau+d) - R_{cos}(\tau-d) ]$$

$$Z_P^* = A . expi(-\varphi) . R_{cos}(\tau)$$

$$\varepsilon_\tau(\varphi, \tau, 0, 0) = A^2/\mu . [ R_{cos}(\tau+d) - R_{cos}(\tau-d) ] . R_{cos}(\tau)$$

$$\varepsilon_\tau(\varphi, 0, 0, 0) = 0$$

$$\partial\varepsilon_\tau/\partial\tau(\varphi, 0, 0, 0) = 2A^2/\mu . R_{cos}'(d) . R_{cos}(0)$$

$$\varepsilon_\tau(\varphi, \tau, 0, 0) \cong 2A^2/\mu \ . \ R_{cos}'(d) \ . \ R_{cos}(0) \ . \ \tau$$

$$\varepsilon_\tau(\varphi, \tau, 0, 0) \cong \tau \qquad \text{pour} \ \ \mu = 2A^2 \, R_{cos}'(d) \ . \ R_{cos}(0) \ \ \text{et} \ \ \tau << 1$$

La figure 7 montre les fonctions $R_{cos}(\tau)$ et $\varepsilon_\tau(\varphi, \tau, 0, 0)$, Tchip étant la durée d'un créneau du code d'étalement. Si $\Delta\tau = 0$ et $\Delta\varphi \neq 0$ on a :

$$\varepsilon_\tau(\varphi, \tau, \Delta\varphi, 0) = A^2/\mu \ . \ [ \ \cos\{\omega_{sp}.(\tau+d)+\Delta\varphi\}.R(\tau+d) - $$
$$\cos\{\omega_{sp}.(\tau-d)+\Delta\varphi\}.R(\tau-d) \ ]. \ \cos(\omega_{sp}.\tau+\Delta\varphi).R(\tau)$$

La figure 8 montre les fonction $\cos\{\omega_{sp}.\tau+\Delta\varphi\}.R(\tau)$ et $\varepsilon_\tau(\varphi, \tau, 0, 0)$

$$\varepsilon_\tau(\varphi, 0, \Delta\varphi, 0)$$
$$= A^2/\mu \ . \ [ \ \cos(\omega_{sp}.d+\Delta\varphi) - \cos(-\omega_{sp}.d+\Delta\varphi) \ ] \ . \ R(d) \ . \ \cos(\Delta\varphi) \ . \ R(0)$$

$$\varepsilon_\tau(\varphi, 0, \Delta\varphi, 0) \cong A^2/\mu \ . \ 2\sin(\omega_{sp}.d) \ . \ \Delta\varphi \ . \ R(d) \ . \ \cos(\Delta\varphi) \ . \ R(0)$$

$$\varepsilon_\tau(\varphi, 0, \Delta\varphi, 0) \cong \rho \ . \ \Delta\varphi \qquad \text{pour} \ \rho = A^2/\mu. \ 2\sin(\omega_{sp}.d+\Delta\varphi) \ . \ R(d). \ \cos(\Delta\varphi).R(0)$$

On voit apparaître un biais et en outre on perd de la précision : D'où la nécessité de maintenir $\Delta\varphi$ nul.
En fait, le biais va se traduire dans la boucle de code par une erreur sur le temps reçu estimé, c'est-à-dire, un $\tau$ non nul.
Si $\Delta\tau \neq 0$ et $\Delta\varphi = 0$ on a :

$$\varepsilon_\tau(\varphi, \tau, 0, \Delta\tau)$$
$$= (\tfrac{1}{2}A)^2/\mu \ . \ [ \ \cos\{\omega_{sp}.(\tau+d)\}.\{ \ R(\tau+d+\Delta\tau) + R(\tau+d-\Delta\tau) \ \} - $$
$$\cos\{\omega_{sp}.(\tau-d)\}.\{ \ R(\tau-d+\Delta\tau) + R(\tau-d-\Delta\tau) \ \} \ ]. \ \cos\{\omega_{sp}.\tau\}.\{ \ R(\tau+\Delta\tau) + R(\tau-\Delta\tau) \ \}$$

$$\varepsilon_\tau(\varphi, 0, 0, \Delta\tau)$$
$$= (\tfrac{1}{2}A)^2/\mu. \ \cos(\omega_{sp}.d).\{ \ R(d+\Delta\tau) + R(d-\Delta\tau) - R(-d+\Delta\tau) - R(-d-\Delta\tau) \ \} \ ].2.R(\Delta\tau)$$

$$\varepsilon_\tau(\varphi, 0, 0, \Delta\tau) = 0 \qquad \text{car R est symétrique}$$

On n'a pas de biais par contre on perd de la puissance.

7.c - Discriminateur de différentiel de retard :

$$\varepsilon_{\Delta\varphi} = \arg[\, Z_{P\,b} \,.\, Z_{P\,a}^* \,]/2 \;-\; \omega_{sp}\,.\,\varepsilon_\tau$$

$$Z_{P\,b} \,.\, Z_{P\,a}^* = (\tfrac{1}{2}A)^2 \,.\, \mathrm{expi}\{\, 2\omega_{sp}.\tau \;+\; 2\Delta\varphi \,\} \,.\, R\{\tau -\Delta\tau\} \,.\, R\{\tau+\Delta\tau\}$$

$$\arg[\, Z_{P\,b} \,.\, Z_{P\,a}^* \,]/2 = \omega_{sp}.\tau \;+\; \Delta\varphi$$

Si $\Delta\tau = 0$ on a:

$$\varepsilon_\tau(\varphi,\, \tau,\, \Delta\varphi,\, 0) \;\cong\; \tau \;+\; \rho.\Delta\varphi$$

$$\varepsilon_{\Delta\varphi}(\varphi,\, \tau,\, \Delta\varphi,\, 0) \;=\; \omega_{sp}.\tau + \Delta\varphi \;-\; \omega_{sp}\,.\,(\,\tau + \rho.\Delta\varphi\,) \;\cong\; (1 - \omega_{sp}.\rho).\Delta\varphi$$

pour $\Delta\varphi \ll 1$

Variante :

On peut prendre :

$$\varepsilon_{\Delta\varphi} = \arg[\, Z_{P\,b} \,.\, Z_{P\,a}^* \,]/2 \;-\; \omega_{sp}\,.\,(\varepsilon_{code\,b} + \varepsilon_{code\,a}) \,/\, \eta$$

$$(\varepsilon_{code\,b} + \varepsilon_{code\,a})/\eta \;\cong\; \tau \qquad\qquad \text{pour } \tau \ll 1 \;\; \text{et} \;\; \Delta\tau \ll 1$$

$$\varepsilon_{\Delta\varphi}(\varphi,\, \tau,\, \Delta\varphi,\, 0) \;=\; \omega_{sp}.\tau + \Delta\varphi \;-\; \omega_{sp}\,.\,(\varepsilon_{code\,b} + \varepsilon_{code\,a})/\eta \;\cong\; \Delta\varphi$$

7.d - Discriminateur de différentiel de retard :

$$\varepsilon_{\Delta\tau} \;=\; (\,\varepsilon_{code\,b} - \varepsilon_{code\,a}\,) \,/\, \eta$$

$$\varepsilon_{code\,a} = \mathrm{Re}[\, (Z_{A\,a} - Z_{R\,a}) \,.\, Z_{P\,a}^* \,]$$

$$Z_{P\,a} = \tfrac{1}{2}A \,.\, \text{expi}\{\, \varphi \; - \omega_{sp}.\tau \; - \Delta\varphi \,\} \,.\, R\{\, \tau \quad - \Delta\tau \,\}$$

$$Z_{A\,a} = \tfrac{1}{2}A \,.\, \text{expi}\{\, \varphi \; - \omega_{sp}.\tau \; - \Delta\varphi \,\} \,.\, R\{\, \tau + d - \Delta\tau \,\}$$

$$Z_{R\,a} = \tfrac{1}{2}A \,.\, \text{expi}\{\, \varphi \; - \omega_{sp}.\tau \; - \Delta\varphi \,\} \,.\, R\{\, \tau - d - \Delta\tau \,\}$$

$$\varepsilon_{code\,a}(\varphi, \tau, \Delta\varphi, \Delta\tau) = (\tfrac{1}{2}A)^2 \,.\, [\, R(\tau + d - \Delta\tau) - R(\tau - d - \Delta\tau) \,] \,.\, R(\tau - \Delta\tau)$$

$$\varepsilon_{code\,a}(\varphi, \tau, \Delta\varphi, \Delta\tau) \cong 2(\tfrac{1}{2}A)^2 \, R'(d) \,.\, R(0) \,.\, (\tau - \Delta\tau)$$

$$\varepsilon_{code\,b} = \text{Re}[\, (Z_{A\,b} - Z_{R\,b}) \,.\, Z_{P\,b}{}^{*} \,] / \eta$$

$$Z_{P\,b} = \tfrac{1}{2}A \,.\, \text{expi}\{\, \varphi + \omega_{sp}.\tau + \Delta\varphi \,\} \,.\, R\{\, \tau \quad + \Delta\tau \,\}$$

$$Z_{A\,b} = \tfrac{1}{2}A \,.\, \text{expi}\{\, \varphi + \omega_{sp}.\tau + \Delta\varphi \,\} \,.\, R\{\, \tau + d + \Delta\tau \,\}$$

$$Z_{R\,b} = \tfrac{1}{2}A \,.\, \text{expi}\{\, \varphi + \omega_{sp}.\tau + \Delta\varphi \,\} \,.\, R\{\, \tau - d + \Delta\tau \,\}$$

$$\varepsilon_{code\,b}(\varphi, \tau, \Delta\varphi, \Delta\tau) = (\tfrac{1}{2}A)^2 \,.\, [\, R(\tau + d + \Delta\tau) - R(\tau - d + \Delta\tau) \,] \,.\, R(\tau + \Delta\tau) \cong 2(\tfrac{1}{2}A)^2 \, R'(d) \,.\, R(0) \,.\, (\tau + \Delta\tau)$$

$$\varepsilon_{\Delta\tau}(\varphi, \tau, \Delta\varphi, \Delta\tau) \cong 2(\tfrac{1}{2}A)^2/\eta \,.\, R'(d) \,.\, R(0) \,.\, \Delta\tau$$

$$\varepsilon_{\Delta\tau}(\varphi, \tau, \Delta\varphi, \Delta\tau) \cong \Delta\tau$$

pour $\eta = 2(\tfrac{1}{2}A)^2.R'(d).R(0)$ , $\tau \ll 1$ et $\Delta\tau \ll 1$

8 - Estimation du différentiel phase pour la calibration :

On recale $\Delta\varphi_{cal}$ à partir des estimations de l'erreur de calibration ($\Delta\varphi = \Delta\varphi_{cal} - \Delta\varphi_{cal\,0}$ ) effectuées sur chaque satellite reçu. Cela permet de moyenner les bruits de mesure entre les satellites, en pondérant les mesures en fonction de leur qualité, qui dépend du rapport signal sur bruit et de l'inclinaison du satellite : (cf. figure 5)

$$\Delta\varphi_{cal}(k) = \Delta\varphi_{cal}(k-1) - \Sigma_{i=1 \text{ à } N} \ w_i(k) \cdot \varepsilon_{\Delta\varphi \ i}(k)$$

$w_i(k)$ = gain de recalage dépendant du satellite dans le canal i considéré (on a N canaux)
Par exemple : $w_i = C/N0_i / (\Sigma_{m=1 \text{ à } N} C/N0_m) \cdot e^{-dT/\tau}$
avec $C/N0_i$ rapport signal sur bruit estimé sur le canal i

Filtre du premier ordre :

$\Sigma_{i=1 \text{ à } N} w_i(k) = e^{-dT/\tau}$ avec $\tau$ constante de temps du filtre de calibration et dT période en k
$\varepsilon_{\Delta\varphi \ i}$ est une estimée de l'erreur de calibration du différentiel de phase :

$$\varepsilon_{\Delta\varphi \ i}(k) = \Delta\varphi_{cal \ idéal} - \Delta\varphi_{cal}(k-1) + bruit_{canal \ i}$$

9 - Estimation du différentiel de retard pour la calibration :

Idem. (cf. figure 5)

$$\Delta\tau_{cal}(k) = \Delta\tau_{cal}(k-1) - \Sigma_{i=1 \text{ à } N} w_i(k) \cdot \varepsilon_{\Delta\tau \ i}(k)$$

$w_i$ = gain de recalage dépendant du satellite considéré

10 - Réalisation pratique :

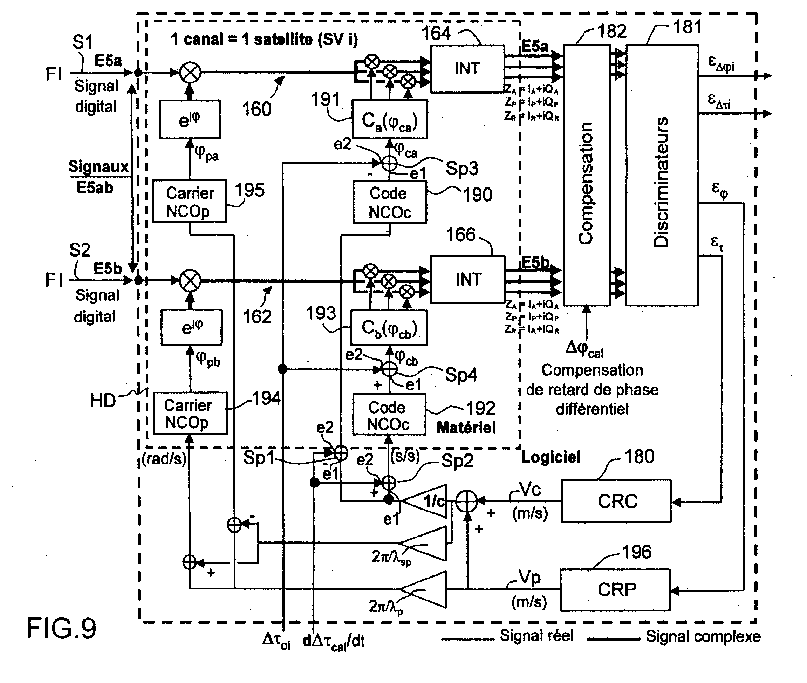

La figure 9 représente une réalisation pratique d'un canal de réception du récepteur selon l'invention.
L'idée est de conserver l'architecture matérielle d'un canal de réception, qui inclut :

- les oscillateurs contrôlés numériquement de code NCOc et de porteuse NCOp,
- les générateurs de codes locaux et de porteuse locale et les corrélateurs (multiplicateurs + intégrateur), identique à celle d'un traitement dissocié entre les deux signaux d'entrée (E5a et E5b) conformément à l'état de l'art. On ne modifie que le traitement réalisé à basse cadence en logiciel pour obtenir un récepteur selon l'invention. A cet effet on applique la compensation du différentiel de phase en sortie des corrélateurs, avant les discriminateurs.

Le canal de réception de la figure 9 comporte une partie matérielle HD entourée en pointillé dans la figure 9, comportant les deux circuits de corrélation 160, 162 pour les deux signaux S1 et S2, dans cet exemple les signaux E5a et E5b. Chacun des circuits de corrélation 160, 162 comporte un intégrateur INT 164, 166, chacun fournissant des signaux :

pour le corrélateur 160 de porteuse E5a :

$$Z_{Aa} = I_{Aa} + iQ_{Aa}$$

$$Z_{Pa} = I_{Pa} + iQ_{Pa}$$

$$Z_{Ra} = I_{Ra} + iQ_{Ra}$$

pour le corrélateur 162 de porteuse E5b :

$$Z_{Ab} = I_{Ab} + iQ_{Ab}$$

$$Z_{Pb} = I_{Pb} + iQ_{Pb}$$

$$Z_{Rb} = I_{Rb} + iQ_{Rb}$$

Correspondant au code avance A, ponctuel P et retard R ;

Une compensation du différentiel de phase en sortie des corrélateurs des deux circuits est appliquée avant les discriminateurs 181 par un module de compensation 182. Les discriminateurs fournissent un signal d'erreur de code $\varepsilon_\tau$ et un signal d'erreur de phase de porteuse $\varepsilon_\varphi$ pour l'asservissement des boucles, ainsi qu'un signal d'erreur de calibration du différentiel de phase $\varepsilon_{\Delta\varphi}$ et un signal d'erreur de calibration du différentiel de retard $\varepsilon_{\Delta\tau}$, pour le filtre de calibration multi-canaux.

On applique la compensation du différentiel de retard en entrée des NCOc de code des circuits de corrélation 160, 162, en dérivant la correction $\Delta\tau_{cal}$ par rapport au temps soit $d\Delta\tau_{cal}/dt$, de sorte qu'en sortie des oscillateurs NCOc de code on obtienne la correction désirée.

A cet effet le canal de réception de la figure 9 comporte :

- un sommateur Sp1 recevant par une entré e1 un signal de vitesse de code après le correcteur de boucle de code CRC 180 et, par une entré e2 le signal de correction dérivé $-d\Delta\tau_{cal}/dt$, et fournissant à une sortie le signal somme des signaux appliquées à ses deux entrées e1 et e2 pour fournir la commande de l'oscillateur de code NCOc 190 du circuit de corrélation recevant la porteuse E5a et,
- un sommateur Sp2 recevant par une entré e1 le signal de vitesse de code après le correcteur de boucle de code CRC 180 et, par une entrée e2 le signal de correction dérivé $d\Delta\tau_{cal}/dt$, et fournissant à une sortie le signal somme des signaux appliquées à ses deux entrées pour fournir la commande de l'oscillateur de code NCOc 192 de l'autre circuit de corrélation recevant la porteuse E5b.

En outre on ajoute aux sorties des deux oscillateurs NCOc de code 190, 192, attaquant les respectifs générateurs de code 191, 193, une correction $\pm\Delta\tau_{0i}$ propre au canal i qui dépend de l'état initial des NCOc au moment où on commence la poursuite en mode cohérent.

A cet effet, le canal de réception comporte aussi :

- un sommateur Sp3 recevant par une entré e1 le signal en sortie de l'oscillateur de code NCOc 190 et, par une entrée e2 une correction $-\Delta\tau_{0i}$ propre à chaque canal et, fournissant à une sortie le signal somme des signaux appliquées à ses deux entrées e1 et e2 pour fournir la phase des générateurs de code (191) du circuit de corrélation recevant la porteuse E5a et ;
- un sommateur Sp4 recevant par une entrée e1 le signal en sortie de l'oscillateur de code NCOc 192 et, par une entré e2 une correction $+\Delta\tau_{0i}$ propre à chaque canal i et fournissant à une sortie le signal somme des signaux appliquées à ses deux entrées e1 et e2 pour fournir la phase des générateurs de code (193) de l'autre circuit de corrélation recevant la porteuse E5b.

Le canal de réception comporte en outre, par circuit de corrélation, un oscillateur NCOp 194, 195 de porteuse centrale piloté à partir du signal de vitesse de porteuse centrale Vp fournie par un correcteur de boucle de porteuse CRP 196 alimenté par les sorties des discriminateurs 181.

La différence de réalisation entre la boucle de phase de porteuse (compensation après la corrélation) et la boucle de code (compensation avant la corrélation sur les phases des codes locaux) tient au fait qu'une correction de $\theta$ sur la phase de la porteuse locale équivaut à une multiplication par $e^{j\theta}$ de la porteuse locale complexe ou d'une multiplication par $e^{-j\theta}$ de la sortie des corrélateurs complexes. Cela n'est pas généralisable au code car une modification de la phase du code local se traduit par une variation d'amplitude (suivant une loi non linéaire en fonction du retard) sur les corrélateurs (et non pas une rotation complexe).

Pour chaque satellite on prend la moyenne des mesures :

$$\varphi_{pi} = (\varphi_{pa} + \varphi_{pb})/2$$

$$t_{\text{reçu estimé } i} = ( \varphi_{ca} + \varphi_{cb} )/2$$

10.a - Initialisation de la poursuite cohérente :

On commence par acquérir et poursuivre chacun des deux signaux indépendamment tel que dans le récepteur représenté à figure 2, conformément à l'état de l'art.

Une fois que chacun des asservissements (PLL et DLL) a convergé sur chaque satellite, on passe en mode de poursuite cohérent selon le récepteur représenté à la figure 4 avec calibration, en réorganisant le calcul des commandes en vitesse appliquées au NCO, suivant le schéma du récepteur de la figure 9.

On ne change pas les valeurs des phases en sortie des NCO de porteuse, mais on les corrige en sortie des corrélateurs. Par contre, il faut corriger les phases en sortie des oscillateurs NCOc de code pour se conformer au schéma de la figure 4 dans lequel on a un seul NCOc code. Pour cela on applique une correction à chacun des NCO code, de signe contraire, dont le but est de supprimer les écarts de code et d'initialiser la correction de calibration (pilotée ensuite en vitesse de variation $d\Delta\tau_{cal} / dt$).

10.b - Initialisation de la calibration (pour l'ensemble des satellites) :

A l'issue de la phase de convergence des boucles de poursuite séparées, on observe différentiels de retard $\Delta\tau_{cal}(0)$ et de phase $\Delta\varphi_{cal}(0)$ entre les deux voies analogiques E5a et E5b directement sur les phases des porteuses et codes locaux, moyennées sur tous les satellites :

$$\Delta\varphi_{cal}(0) = \Sigma_{i=1\text{à }N}\, w_i(0) \cdot [\, (\, \varphi_{pb\,0\,i} - \varphi_{pa\,0\,i}\, )/2 - \omega_{sp}\cdot(\, \varphi_{cb\,0\,i} + \varphi_{ca\,0\,i}\, )/2\, ]$$

$$\Delta\tau_{cal}(0) = \Sigma_{i=1\text{à }N}\, w_i(0) \cdot [\qquad\qquad (\, \varphi_{cb\,0\,i} - \varphi_{ca\,0\,i}\, )/2\, ]$$

Avec : $\Sigma_{i=1\text{à }N}\, w_i(k) = 1$
(On retrouve une analogie avec les discriminateurs de calibration du différentiel de phase et de retard)

Le filtre de calibration 140 est ensuite entretenu pour assurer un suivi des différentiels de phase $\Delta\varphi_{cal}$ et de retard $\Delta\tau_{cal}$ entre les voies E5a et E5b, qui peuvent dériver avec le temps et ou évoluer avec les variations de température.

10.c - Compensation du différentiel de phase : (En sortie des corrélateurs, par logiciel)

Soit i = indice du canal

On corrige les sorties des corrélateurs par une rotation dépendant du déphasage observé sur le canal (à la fin de la phase de poursuite séparée sur E5a et E5b) et de la correction de calibration $\Delta\varphi_{cal}$ issue de l'ensemble des canaux.

$$Z_{A\,a\,i\,compensé} = A_i \cdot e^{+j\Delta\varphi\,cal(0)} \cdot Z_{A\,a\,i} \qquad Z_{A\,b\,i\,compensé} = B_i \cdot e^{-j\Delta\varphi\,cal(0)} \cdot Z_{A\,b\,i}$$

$$Z_{P\,a\,i\,compensé} = A_i \cdot e^{+j\Delta\varphi\,cal(0)} \cdot Z_{P\,a\,i} \qquad Z_{P\,b\,i\,compensé} = B_i \cdot e^{-j\Delta\varphi\,cal(0)} \cdot Z_{P\,b\,i}$$

$$Z_{R\,a\,i\,compensé} = A_i \cdot e^{+j\Delta\varphi\,cal(0)} \cdot Z_{R\,a\,i} \qquad Z_{R\,b\,i\,compensé} = B_i \cdot e^{-j\Delta\varphi\,cal(0)} \cdot Z_{R\,b\,i}$$

$$A_i = \text{expi}(\, -[\, (\, \varphi_{pb\,0\,i} - \varphi_{pa\,0\,i}\, )/2 - \omega_{sp}\cdot(\, \varphi_{cb\,0\,i} + \varphi_{ca\,0\,i}\, )/2\, ]\, )$$

$$B_i = \text{expi}( + [ ( \varphi_{pb\,0\,i} - \varphi_{pa\,0\,i} )/2 - \omega_{sp}.( \varphi_{cb\,0\,i} + \varphi_{ca\,0\,i} )/2 ] )$$

Ainsi juste après la correction :

$$Z_{P\,a\,i\,compensé} = A_i . e^{+ j\Delta\varphi\,cal(0)} . \tfrac{1}{2}A . \text{expi}( - \varphi_{pa\,0\,i} + \varphi_{a\,reçu\,i} + \delta\varphi_a ) . R( ... )$$

$$Z_{P\,b\,i\,compensé} = B_i . e^{- j\Delta\varphi\,cal(0)} . \tfrac{1}{2}A . \text{expi}( - \varphi_{pb\,0\,i} + \varphi_{b\,reçu\,i} + \delta\varphi_b ) . R( ... )$$

$$Z_{P\,a\,i\,compensé} =$$
$$\tfrac{1}{2}A. \text{expi}[(\varphi_{pb\,0\,i}+\varphi_{pa\,0\,i})/2 + \omega_{sp}.(\varphi_{cb\,0\,i}+\varphi_{ca\,0\,i})/2 + j\Delta\varphi_{cal}(0) + \varphi_{a\,reçu\,i} +\delta\varphi_a ].R(...)$$

$$Z_{P\,b\,i\,compensé} =$$
$$\tfrac{1}{2}A. \text{expi}[(\varphi_{pb\,0\,i}+\varphi_{pa\,0\,i})/2 - \omega_{sp}.(\varphi_{cb\,0\,i}+\varphi_{ca\,0\,i})/2 - j\Delta\varphi_{cal}(0) + \varphi_{b\,reçu\,i} +\delta\varphi_b].R(...)$$

Ce qui est équivalent à :

$$Z_{P\,a\,i\,compensé} = \tfrac{1}{2}A . \text{expi}[ - \varphi_{pa\,virtuel\,i} + \varphi_{a\,reçu\,i} + \delta\varphi_a ] . R( ... )$$

$$Z_{P\,b\,i\,compensé} = \tfrac{1}{2}A . \text{expi}[ - \varphi_{pb\,virtuel\,i} + \varphi_{b\,reçu\,i} + \delta\varphi_b ] . R( ... )$$

Avec:

$$\varphi_{pa\,virtuel\,i} = \varphi_{p\,0\,i} + \omega_{sp} . \varphi_{c\,0\,i} + \Delta\varphi_{cal}(0)$$

$$\varphi_{pb\,virtuel\,i} = \varphi_{p\,0\,i} - \omega_{sp} . \varphi_{c\,0\,i} - \Delta\varphi_{cal}(0)$$

$$\varphi_{p\,0\,i} = (\varphi_{pb\,0\,i}+\varphi_{pa\,0\,i})/2$$

$$\varphi_{c\,0\,i} = (\varphi_{cb\,0\,i}+\varphi_{ca\,0\,i})/2$$

$\varphi_{p\,0\,i}$ et $\varphi_{sp\,0\,i}$ dépendent du canal (donc du satellite) alors que $\Delta\varphi_{cal}(0)$ est commune à tous les canaux
Conclusion : On retrouve une expression conforme au schéma de la figure 4.

10.4 - Compensation du différentiel de retard : (En sortie des NCOc code)

Initialisation :

Correction initiale :

$$\Delta\tau_{0\,i} = -(\varphi_{cb\,0\,i} - \varphi_{ca\,0\,i})/2 + \Delta\tau_{cal}(0)$$

Cette correction, propre à chaque canal est appliquée en sortie des NCO de code, conformément au schéma de la figure 4 (elle pourrait aussi être induite en jouant sur les commandes NCO, par glissement, à l'initialisation) à l'initialisation.
Ainsi juste après la correction :

$$\varphi_{ca\,i} = \varphi_{ca\,0\,i} - \Delta\tau_{0\,i} = (\varphi_{cb\,0\,i} + \varphi_{ca\,0\,i})/2 - \Delta\tau_{cal}(0)$$

$$\varphi_{cb\,i} = \varphi_{cb\,0\,i} + \Delta\tau_{0\,i} = (\varphi_{cb\,0\,i} + \varphi_{ca\,0\,i})/2 + \Delta\tau_{cal}(0)$$

Ce qui est équivalent à :

$$\varphi_{ca\,i} = \varphi_{c\,0\,i} - \Delta\tau_{cal}(0)$$

$$\varphi_{cb\,i} = \varphi_{c\,0\,i} + \Delta\tau_{cal}(0)$$

$\varphi_{c\,0\,i}$ dépend du canal (donc du satellite) alors que $\Delta\tau_{cal}(0)$ est commune à tous les canaux
Conclusion : On retrouve une expression conforme au schéma de la figure 3.

Remarque :

Dans le cas idéal où pour chaque canal on a :

$$(\varphi_{pb\,i} - \varphi_{pa\,i})/2 - \omega_{sp}.(\varphi_{cb\,i} + \varphi_{ca\,i})/2 = \Delta\varphi_{cal}(0)$$

$$(\varphi_{cb\,i} - \varphi_{ca\,i})/2 = \Delta\tau_{cal}(0)$$

(autrement dit tous les termes de gauches seraient identiques, sur tous les canaux)
On obtiendrait :

$$A_i \cdot e^{-j\Delta\varphi\,cal(0)} = 1$$

$$B_i \cdot e^{+j\Delta\varphi\,cal(0)} = 1$$

$$\Delta\tau_{0\,i} = 0$$

Donc la calibration initiale n'apporterait rien !

Ce résultat n'est en fait pas surprenant dans la mesure où à l'issue de la phase de convergence initiale on aurait dans ce cas déjà atteint l'objectif de la calibration : chaque canal s'est positionné au maximum d'énergie par les boucles de poursuite initiales sur E5a et sur E5b, et les valeurs $\Delta\tau_{cal}(0)_i$ et $\Delta\varphi_{cal}(0)_i$ du différentiel de retard et du différentiel de phase (respectivement) observées en sortie des NCO sont identiques sur tous les canaux.

Entretien de la compensation :

Après l'initialisation on entretien la correction en ajoutant un complément aux commandes en vitesse des deux NCO code, conformément au schéma de la figure 5 :

$$d\Delta\tau_{cal}/dt = [\ \Delta\tau_{cal}(k+1) - \Delta\tau_{cal}(k)\ ]\ /\ dT \qquad \text{avec dT : pas d'échantillonnage en k}$$

10.5 - Calibration de l'amplitude :

Les gains des deux voies analogiques peuvent être différents. Il est important de compenser ces différences lorsque l'on construit les discriminateurs, pour éviter les biais dus au déséquilibre entre les voies. Pour cela on identifie le rapport entre les puissances en sortie des corrélateurs ponctuels des voies a et b :

$$\lambda(0) = \Sigma_{i=1\text{à N}}\ w_i(0)\ (\ ||Z_{P\,b}||^2\ /\ ||Z_{P\,a}||^2\ )_i$$

$$\lambda(k) = \lambda(k-1)\ -\ \Sigma_{i=1\text{à N}}\ w_i(k)\ .\ [\ (||Z_{P\,b}||^2\ /\ ||Z_{P\,a}||^2)_i - \lambda(k-1)\ ]$$

On applique la compensation en sortie des corrélateurs, avant les discriminateurs :

$$Z_P = \lambda.\qquad Z_{P\,a}\ +\qquad Z_{P\,b}$$

$$Z_A = \lambda.e^{+i\omega d}\ Z_{A\,a}\ +\ e^{-i\omega d}\ Z_{A\,b}$$

$$Z_R = \lambda.e^{-i\omega d}\ Z_{R\,a}\ +\ e^{+i\omega d}\ Z_{R\,b}$$

On suppose que les erreurs de boucle et de calibration sont résorbées. En retour la compensation de la différence d'amplitude réduit l'impact du déséquilibre d'amplitude sur les discriminateurs de boucle et de calibration.

10.6 - Traitement des données

Cas où le signal ne dispose pas d'une voie pilote (sans données) :
Dans ce cas on doit redresser les bits de données avant d'appliquer les discriminateurs :

$$Z_{A\,a\,\text{redressé}} = Z_{A\,a}\ .\ \text{signe}(\ \text{Im}[\ Z_{P\,a}\ ]\ ) \qquad Z_{A\,b\,\text{redressé}} = Z_{A\,b}\ .\ \text{signe}(\ \text{Im}[\ Z_{P\,b}\ ]\ )$$

$$Z_{P\,a\,\text{redressé}} = Z_{P\,a}\ .\ \text{signe}(\ \text{Im}[\ Z_{P\,a}\ ]\ ) \qquad Z_{P\,b\,\text{redressé}} = Z_{P\,b}\ .\ \text{signe}(\ \text{Im}[\ Z_{P\,b}\ ]\ )$$

$$Z_{R\,a\,redressé} = Z_{R\,a} \cdot \text{signe}(\,\text{Im}[\,Z_{P\,a}\,]\,) \qquad Z_{R\,b\,redressé} = Z_{R\,b} \cdot \text{signe}(\,\text{Im}[\,Z_{P\,b}\,]\,)$$

( Im : partie réelle)

Cas où on souhaite utiliser les voies pilote et donnée :

On applique les discriminateurs de sur la voie pilote uniquement, sauf le discriminateur de code qui utilise les deux voies :

$$\varepsilon_\tau = \{\,\text{Re}[\,(Z_{A\,pilote} - Z_{R\,pilote})\cdot Z_{P\,pilote}{}^*\,] +$$
$$\text{Re}[\,(Z_{A\,données} - Z_{R\,données})\cdot Z_{P\,données}{}^*\,]\,\}\,/\,2\,/\,\mu$$

Cela permet de réduire le bruit thermique sur la mesure de code, à condition que le rapport signal sur bruit soit largement positif dans la bande de prédétection ($B_{prédetection} = 1/T$).

Le récepteur selon l'invention permet une meilleure précision de mesure du positionnement par une moindre sensibilité de la mesure de code vis-à-vis du bruit thermique et des multi-trajets. Il présente en outre une meilleure robustesse (moins de saut de cycles et décrochage de la boucle de phase de porteuse du aux interférences).

Cette technique de correction de phase et délai différentiel se produisant dans les étages analogiques de réception pour deux porteuses s'applique aussi lorsque le filtre analogique est commun aux signaux a et b car il peut y avoir des déphasages et retards entre les deux composantes du signal, dus aux distorsions des fonctions de transfert des filtres analogiques.

**Revendications**

1. Récepteur de positionnement par satellites comportant au moins un canal de réception (R1, R2,...Ri,...RN), chaque canal de réception étant destiné à effectuer un traitement combiné d'un premier S1 et d'un second S2 signaux radioélectriques émis par un même satellite et séparés en fréquence, les signaux étant reçus par des voies analogiques du récepteur puis numérisés pour être traités dans des voies de réception numériques, **caractérisé en ce que** chaque canal de réception comporte :

   - un premier (40, 160) et un second (42, 162) circuits de corrélation recevant respectivement le premier et le second signaux reçus numérisés, chaque corrélateur ayant, une voie de corrélation de porteuse (100, 102) entre le respectif signal reçu et une respective porteuse locale complexe (Lp1, Lp2), des voies de corrélation de code (112, 114) entre le signal reçu corrélé en sortie des voies de corrélation de porteuse et des respectifs codes locaux, un intégrateur (130, 132, 164, 166) par voie de corrélation de code, le récepteur comportant en outre :
   - des discriminateurs de phase de porteuse et de code (106, 181), les discriminateurs étant communs aux deux circuits de corrélation et fournissant, à partir des signaux en sortie des intégrateurs des deux circuits de corrélation, d'une part, après un correcteur de boucle de code, un signal de vitesse de sous-porteuse et de code (Vc) et, d'autre part, après un correcteur de boucle de porteuse, un signal de vitesse de porteuse centrale (Vp) ;
   - un générateur de codes locaux (119, 121, 191, 193) par voie de corrélation de code, chaque générateur de code étant piloté par un signal de phase locale de code en sortie d'au moins un oscillateur à commande numérique NCOc de code (118, 190, 192) commandé par le signal de vitesse de sous-porteuse (Vc), les codes locaux fournis par chaque générateur de codes étant décalés d'une correction de retard différentiel positive $+\Delta\tau_{cal}$ pour un des circuits de corrélation et, d'une correction de retard différentiel négative $-\Delta\tau_{cal}$ pour l'autre, ces corrections tendant à compenser le différentiel de retard entre les deux signaux reçus dans les voies analogiques du canal de réception ;
   - un générateur de porteuse locale complexe (43, 45) par voie de corrélation de porteuse, chaque générateur de porteuse locale étant piloté par un signal de phase locale de porteuse en sortie d'au moins un oscillateur à commande numérique NCOp de porteuse (104, 194, 195) commandé par un signal de vitesse de porteuse centrale.

**2.** Récepteur de positionnement par satellites selon la revendication 1, **caractérisé en ce qu'**il comporte, en outre, un dispositif de correction de différentiel de phase $\Delta\varphi_{cal}$ tendant à compenser l'écart différentiel de phase entre les deux signaux reçus S1, S2 se produisant dans les voies analogiques du canal de réception.

**3.** Récepteur de positionnement par satellites selon l'une des revendications 1 ou 2, **caractérisé en ce que** chaque canal de réception comporte en outre :

- une voie de corrélation de sous-porteuse par signal reçu S1, S2 avec des sous-porteuses locales complexes générées par un respectif générateur de sous-porteuse (111, 113) piloté par un signal de phase locale de sous-porteuse en sortie de oscillateur à commande numérique NCOc de code (118), chaque voie de corrélation de sous-porteuse recevant les signaux corrélés de sa respective voie de corrélation de porteuse (100, 102) et fournissant des signaux de corrélation de sous-porteuse à sa respective voie de corrélation de code (112, 114), le signal de phase locale de sous-porteuse étant décalé de la phase différentielle $\Delta\varphi_{cal}$ tendant à compenser le différentiel de phase entre les deux signaux reçus se produisant dans les voies analogiques du canal de réception.

**4.** Récepteur de positionnement par satellites selon l'une des revendications 1 à 3, **caractérisé en ce qu'**il comporte en outre un dispositif de calibration (140) fournissant, à partir des valeurs des différentiels de phase et de retard estimées par les différents canaux (R1, R2,...RN) du récepteur, les valeurs des corrections de différentiel de phase $\Delta\varphi_{cal}$ et de différentiel de retard $\Delta\tau_{cal}$ à appliquer en sortie des oscillateurs à commande numérique NCO de porteuse (ou sous-porteuse) et de code communes à tous les canaux.

**5.** Récepteur de localisation selon l'une des revendications 1 à 4, **caractérisé en ce que** chaque canal comporte le premier circuit de corrélation (40) attaqué par un premier signal reçu S1 et le second circuit de corrélation (42) attaqué par le second signal reçu S2, chaque circuit de corrélation comportant un voie de corrélation de porteuse centrale (100, 102) entre son respectif signal reçu S1, S2 et deux respectives porteuses locales complexes Lp1 pour la première voie de corrélation (100) et Lp2 pour la deuxième voie (102), ces porteuses locales étant générées par un respectif générateur de porteuse locale (43, 45) piloté par un signal de phase locale $\varphi_p$ en sortie d'un oscillateur commun à commande numérique NCOp (104) de porteuse centrale contrôlé par le signal de vitesse de porteuse Vp en sortie d'un circuit de discriminateurs (106) de phase de porteuse centrale DSP à travers un correcteur de phase de porteuse centrale CRP (107), les signaux en sortie des voies de corrélation de porteuse centrale étant appliqués à des voies de corrélation de sous-porteuse (108, 110) avec des respectives sous-porteuses locales Ls1, pour la première voie de corrélation de sous-porteuse et Ls2 pour l'autre voie de corrélation, puis aux voies de corrélation de code (112,114).

**6.** Récepteur de localisation selon la revendication 5, **caractérisé en ce que** les sous-porteuse locales Ls1 et Ls2 sont générées par un respectif générateur de sous-porteuse locale (111, 113) piloté par un signal de phase locale sous-porteuse $\varphi_{sp}$ en sortie d'un oscillateur commun à commande numérique NCOc de locale de sous-porteuse et de code (118) commandé par un signal de vitesse de code Vc en sortie d'un discriminateur de phase de code DSC du circuit des discriminateurs (106) à travers un correcteur de phase de code CRC (120) et un sommateur de phase de sous-porteuse (122) recevant, à une entrée ep1, la phase de sous-porteuse en sortie de l'oscillateur NCOc de code (118) et; à une autre entrée ep2, une correction de différentiel de phase $\Delta\varphi_{cal}$ tendant à compenser le différentiel de phase entre les deux signaux reçus se produisant dans les voies analogiques du récepteur, le sommateur de phase de sous porteuse (122) fournissant, à sa sortie, un signal de phase locale des sous-porteuses décalées en phase pour attaquer le générateur de sous-porteuse des voies de corrélation de sous-porteuse.

**7.** Récepteur de localisation selon la revendication 6, **caractérisé en ce que** les signaux en sortie des voies de corrélation de sous-porteuse (108, 110) sont ensuite corrélés dans les respectives voies de corrélation de code (112, 114) avec les respectifs codes locaux fournis par les respectifs générateurs de code local (119, 121) pour la voie de signal S1 et la voie de signal S2, les générateurs de code local (119, 121) étant pilotés par un respectif signal de phase de code $\varphi_{CA}$, $\varphi_{CB}$ en sortie de l'oscillateur de code commun NCOc (118) commandé par le signal de vitesse de sous-porteuse (ou de code) Vc, à travers, un premier sommateur de code local (124) recevant à une entrée ec1 la phase du code local en sortie de l'oscillateur de code local et à une autre entrée ec2 une correction de retard différentiel $-\Delta\tau_{cal}$ tendant à compenser le retard différentiel, le premier sommateur (124) fournissant à une sortie une phase de code local décalée pour piloter le générateur de codes local (119) de la voie de signal S1 et, un second sommateur de code local (126) recevant à une entrée ec1 la phase du code local en sortie de l'oscillateur de code local NCOc et à une autre entrée ec2 une correction de retard différentiel $+\Delta\tau_{cal}$ tendant à compenser le retard différentiel, le second sommateur (126) de code local fournissant à une sortie une phase de code local décalée pour piloter le générateur de code local (118) de la voie de signal S2.

8. Récepteur de positionnement par satellites selon l'une revendications 1 ou 2, **caractérisé en ce que** chaque canal de réception comporte un NCOc de code (190, 192) pour chaque composante du signal S1 et S2 et **en ce que** les respectives corrections de retard différentiels, positive $+\Delta\tau_{cal}$ et négative $-\Delta\tau_{cal}$, sont effectuées par application aux entrées des NCOc de code de respectifs signaux de correction $+d\Delta\tau_{cal}/dt$ et $-d\Delta\tau_{cal}/dt$ dérivée du signal de retard différentiel $+\Delta\tau_{cal}$ et $-\Delta\tau_{cal}$ par rapport au temps t, et **en ce qu'**on ajoute en sortie des oscillateurs à commande numérique NCOc de code (190, 192) une respective correction $+\Delta\tau_{0i}$ et $-\Delta\tau_{0i}$ propre à chaque canal i qui dépend de l'état initial des oscillateurs NCOc de code au moment où le canal de réception commence la poursuite en mode cohérent du signal.

9. Récepteur de positionnement par satellites selon l'une des revendications 5 à 8, **caractérisé en ce que** chacun des circuits de corrélation (160, 162) du canal de réception comporte un intégrateur INT (164, 166), chacun fournissant des signaux :

pour le corrélateur (160) de porteuse E5a :

$$Z_{Aa} = I_{Aa} + iQ_{Aa}$$

$$Z_{Pa} = I_{Pa} + iQ_{Pa}$$

$$Z_{Ra} = I_{Ra} + iQ_{Ra} \, ,$$

pour le corrélateur (162) de porteuse E5b :

$$Z_{Ab} = I_{Ab} + iQ_{Ab}$$

$$Z_{Pb} = I_{Pb} + iQ_{Pb}$$

$$Z_{Rb} = I_{Rb} + iQ_{Rb}$$

correspondant aux codes avance A, ponctuel P et retard R ;

10. Récepteur de positionnement par satellites selon l'une des revendications 5 à 10, **caractérisé en ce qu'**une compensation du différentiel de phase en sortie des corrélateurs des deux circuits est appliquée avant les discriminateurs (181) par un module de compensation (182), les discriminateurs fournissant un signal d'erreur de code $\varepsilon_\varphi$ et un signal d'erreur de vitesse de phase $\varepsilon_\varphi$ pour l'asservissement des boucles.

11. Récepteur de positionnement par satellites selon l'une des revendications 5 à 10, **caractérisé en ce que** chaque canal de réception comporte :

- un sommateur Sp1 recevant par une entré e1 un signal de vitesse de code après une correction de vitesse de code CRC (180) et, par une entré e2 le signal de correction dérivé $-d\Delta\tau_{cal}/dt$, et fournissant à une sortie le signal somme des signaux appliquées à ses deux entrées e1 et e2 pour attaquer la commande de oscillateur de code NCOc (190) du circuit de corrélation recevant la porteuse E5a et,
- un sommateur Sp2 recevant par une entré e1 le signal de vitesse de code $\varepsilon_\tau$ après la correction de vitesse de code CRC (180) et, par une entrée e2 le signal de correction dérivé $d\Delta\tau_{cal}/dt$, et fournissant à une sortie le signal somme des signaux appliquées à ses deux entrées pour attaquer la commande de oscillateur de code NCOc (192) de l'autre circuit de corrélation recevant la porteuse E5b ;
- un sommateur Sp3 recevant par une entré e1 le signal en sortie de l'oscillateur de code NCOc (190) et, par une entrée e2 une correction $-\Delta\tau_{0i}$ propre à chaque canal et, fournissant à une sortie le signal somme des signaux appliquées à ses deux entrées e1 et e2 pour fournir la phase des générateurs de code (191) du circuit de corrélation recevant la porteuse E5a et ;

- un sommateur Sp4 recevant, par une entrée e1, le signal en sortie de l'oscillateur de code NCOc (192) et, par une entré e2, une correction $+\Delta\tau_{0i}$ propre au canal i et fournissant à une sortie le signal somme des signaux appliquées à ses deux entrées e1 et e2 pour fournir la phase des générateurs de code (193) de l'autre circuit de corrélation recevant la porteuse E5b.

- par circuit de corrélation, un oscillateur NCOp (194, 195) de porteuse centrale piloté à partir du signal de vitesse de porteuse centrale Vp fournie par un correcteur de boucle de porteuse CRP (196) alimenté par les sorties des discriminateurs (181).

**12.** Récepteur de positionnement par satellites selon l'une des revendications 1 à 11, **caractérisé en ce que** le discriminateur de code utilise la sortie des voies de corrélation avance, ponctuelle et retard sur S1 et S2 (après calibration).

**Claims**

**1.** Satellite positioning receiver comprising at least one receive channel (R1, R2,...Ri,...RN), each receive channel being intended to perform a combined processing of a first S1 and a second S2 radiofrequency signals transmitted by one and the same satellite and separated in frequency, the signals being received by analogue paths of the receiver then digitized to be processed in digital receive paths, **characterized in that** each receive channel comprises:

- a first (40, 160) and a second (42, 162) correlation circuits, respectively receiving the first and the second digitized received signals, each correlator having a carrier correlation path (100, 102) between the respective received signal and a respective complex local carrier (Lp1, Lp2), code correlation paths (112, 114) between the correlated received signal output from the carrier correlation paths and respective local codes, an integrator (130, 132, 164, 166) for each code correlation path, the receiver further comprising:
- carrier and code phase discriminators (106, 181), the discriminators being common to both correlation circuits and supplying, from signals output from the integrators of the two correlation circuits, on the one hand, after a code loop corrector, a subcarrier and code velocity signal (Vc) and, on the other hand, after a carrier loop corrector, a central carrier velocity signal (Vp);
- a local code generator (119, 121, 191, 193) for each code correlation path, each code generator being driven by a local code phase signal output from at least one code numerically controlled oscillator NCOc (118, 190, 192) controlled by the subcarrier velocity signal (Vc), the local codes supplied by each code generator being offset by a positive differential delay correction $+\Delta\tau_{cal}$ for one of the correlation circuits and a negative differential delay correction $-\Delta\tau_{cal}$ for the other, these corrections tending to compensate the delay differential between the two signals received in the analogue paths of the receive channel;
- a complex local carrier generator (43, 45) for each carrier correlation path, each local carrier generator being driven by a carrier local phase signal output from at least one carrier numerically controlled oscillator NCOp (104, 194, 195) controlled by a central carrier velocity signal.

**2.** Satellite positioning receiver according to Claim 1, **characterized in that** it comprises, in addition, a phase differential correction device $\Delta\varphi_{cal}$ tending to compensate the phase differential deviation between the two received signals S1, S2 occurring in the analogue paths of the receive channel.

**3.** Satellite positioning receiver according to one of Claims 1 or 2, **characterized in that** each receive channel further comprises:

- a subcarrier correlation path for each received signal S1, S2 with complex local subcarriers generated by a respective subcarrier generator (111, 113) driven by a subcarrier local phase signal output from a code numerically controlled oscillator NCOc (118), each subcarrier correlation path receiving the correlated signals from its respective carrier correlation path (100, 102) and supplying subcarrier correlation signals to its respective code correlation path (112, 114), the subcarrier local phase signal being offset by the phase differential $\Delta\varphi_{cal}$ tending to compensate the phase differential between the two received signals being generated in the analogue paths of the receive channel.

**4.** Satellite positioning receiver according to one of Claims 1 to 3, **characterized in that** it further comprises a calibration device (140) supplying, based on phase and delay differential values estimated by the different channels (R1, R2,...RN) of the receiver, the phase differential $\Delta\varphi_{cal}$ and delay differential $\Delta\tau_{cal}$ correction values to be applied to the output of the carrier (or subcarrier) and code numerically controlled oscillators NCO common to all the channels.

5. Location receiver according to one of Claims 1 to 4, **characterized in that** each channel comprises the first correlation circuit (40) driven by a first received signal S1 and the second correlation circuit (42) driven by the second received signal S2, each correlation circuit comprising a central carrier correlation path (100, 102) between its respective received signal S1, S2 and two respective complex local carriers Lp1 for the first correlation path (100) and Lp2 for the second path (102), these local carriers being generated by a respective local carrier generator (43, 45) driven by a local phase signal $\varphi_p$ output from a common central carrier numerically controlled oscillator NCOp (104) controlled by the carrier velocity signal Vp output from a central carrier phase discriminator circuit DSP (106) through a central carrier phase corrector CRP (107), the signals output from the central carrier correlation paths being applied to subcarrier correlation paths (108, 110) with respective local subcarriers Ls1 for the first subcarrier correlation path and Ls2 for the other correlation path, then to the code correlation paths (112, 114).

6. Location receiver according to Claim 5, **characterized in that** the local subcarriers Ls1 and Ls2 are generated by a respective local subcarrier generator (111, 113) driven by a subcarrier local phase signal $\varphi_{sp}$ output from a common local subcarrier and code numerically controlled oscillator NCOc (118) controlled by a code velocity signal Vc output from a code phase discriminator DSC of the discriminator circuit (106) through a code phase corrector CRC (120) and a subcarrier phase summer (122) receiving, at an input ep1, the subcarrier phase output from the code oscillator NCOc (118) and, at another input ep2, a phase differential correction $\Delta\varphi_{cal}$ tending to compensate the phase differential between the two received signals occurring in the analogue paths of the receiver, the subcarrier phase summer (122) supplying, at its output, a local phase signal of the phase-offset subcarriers to drive the subcarrier generator of the subcarrier correlation paths.

7. Location receiver according to Claim 6, **characterized in that** the signals output from the subcarrier correlation paths (108, 110) are then correlated in the respective code correlation paths (112, 114) with the respective local codes supplied by the respective local code generators (119, 121) for the signal S1 path and the signal S2 path, the local code generators (119, 121) being driven by a respective code phase signal $\varphi_{CA}$, $\varphi_{CB}$ output from the common code oscillator NCOc (118) controlled by the subcarrier (or code) velocity signal Vc, through a first local code summer (124) receiving at an input ec1 the phase of the local code output from the local code oscillator and at another input ec2 a differential delay correction $-\Delta\tau_{cal}$ tending to compensate the differential delay, the first summer (124) supplying at an output an offset local code phase to drive the local code generator (119) of the signal S1 path and a second local code summer (126) receiving at an input ec1 the phase of the local code output from the local code oscillator NCOc and at another input ec2 a differential delay correction $+\Delta\tau_{cal}$ tending to compensate the differential delay, the second local code summer (126) supplying at an output an offset local code phase to drive the local code generator (118) of the signal S2 path.

8. Satellite positioning receiver according to one of Claims 1 or 2, **characterized in that** each receive channel comprises a code NCOc (190, 192) for each component of the signal S1 and S2 and **in that** the respective differential delay corrections, positive $+\Delta\tau_{cal}$ and negative $-\Delta\tau_{cal}$, are performed by applying to the inputs of the respective code NCOcs correction signals $+d\Delta\tau_{cal}/dt$ and $-d\Delta\tau_{cal}/dt$ derived from the differential delay signal $+\Delta\tau_{cal}$ and $-\Delta\tau_{cal}$ relative to the time t, and **in that** there is added to the output from the code numerically controlled oscillators NCOc (190, 192) a respective correction $+\Delta\tau_{0i}$ and $-\Delta\tau_{0i}$ specific to each channel i which depends on the initial state of the code oscillators NCOc at the moment when the receive channel begins coherent mode tracking of the signal.

9. Satellite positioning receiver according to one of Claims 5 to 8, **characterized in that** each of the correlation circuits (160, 162) of the receive channel comprises an integrator INT (164, 166), each supplying signals:

for the carrier E5a correlator (160):

$$Z_{Aa} = I_{Aa} + iQ_{Aa}$$

$$Z_{Pa} = I_{Pa} + iQ_{Pa}$$

$$Z_{Ra} = I_{Ra} + iQ_{Ra} \,,$$

for the carrier E5b correlator (162):

$$Z_{Ab} = I_{Ab} + iQ_{Ab}$$

$$Z_{Pb} = I_{Pb} + iQ_{Pb}$$

$$Z_{Rb} = I_{Rb} + iQ_{Rb}$$

corresponding to the advance A, spot P and delay R codes.

10. Satellite positioning receiver according to one of Claims 5 to 10, **characterized in that** a phase differential compensation output from the correlators of the two circuits is applied before the discriminators (181) by a compensation module (182), the discriminators supplying a code error signal $\varepsilon_\varphi$ and a phase velocity error signal $\varepsilon_\varphi$ for locking the loops.

11. Satellite positioning receiver according to one of Claims 5 to 10, **characterized in that** each receive channel comprises:

- a summer Sp1 receiving via an input e1 a code velocity signal after a CRC code velocity correction (180) and, via an input e2 the derived correction signal $-d\Delta\tau_{cal}/dt$, and supplying at an output the aggregate signal of the signals applied to its two inputs e1 and e2 to drive the code numerically controlled oscillator NCOc (190) of the correlation circuit receiving the carrier E5a and,
- a summer Sp2 receiving via an input e1 the code velocity signal $\varepsilon_\tau$ after the CRC code velocity correction (180) and, via an input e2, the derived correction signal $d\Delta\tau_{cal}/dt$, and supplying at an output, the aggregate signal of the signals applied to its two inputs to drive the code numerically controlled oscillator NCOc (192) of the other correlation circuit receiving the carrier E5b;
- a summer Sp3 receiving via an input e1 the signal output from the code oscillator NCOc (190) and, via an input e2 a correction $-\Delta\tau_{0i}$ specific to each channel and supplying at an output the aggregate signal of the signals applied to its two inputs e1 and e2 to supply the phase of the code generators (191) of the correlation circuit receiving the carrier E5a and;
- a summer Sp4 receiving via an input e1 the signal output from the code oscillator NCOc (192) and, via an input e2, a correction $+\Delta\tau_{0i}$ specific to the channel i and supplying at an output the aggregate signal of the signals applied to its two inputs e1 and e2 to supply the phase of the code generators (193) of the other correlation circuit receiving the carrier E5b;
- for each correlation circuit, a central carrier oscillator NCOp (194, 195) driven from the central carrier velocity signal Vp supplied by a CRP carrier loop corrector (196) fed by the outputs of the discriminators (181).

12. Satellite positioning receiver according to one of Claims 1 to 11, **characterized in that** the code discriminator uses the output of the advance, spot and delay correlation paths on S1 and S2 (after calibration).

**Patentansprüche**

1. Empfänger zum Positionieren durch Satelliten, der mindestens einen Empfangskanal (R1, R2,... Ri.... RN) aufweist, wobei jeder Empfangskanal dazu bestimmt ist, eine kombinierte Verarbeitung eines ersten S1 und eines zweiten S2 Funksignals auszuführen, die von einem gleichen Satelliten gesendet werden und die unterschiedliche Frequenz haben, wobei die Signale von analogen Kanälen des Empfängers empfangen und dann digitalisiert werden, um in den digitalen Empfangskanälen verarbeitet zu werden, **dadurch gekennzeichnet, das** jeder Empfangskanal Folgendes aufweist:

- eine erste (40, 160) und eine zweite (42, 162) Korrelationsschaltung, die jeweils das erste und das zweite Signal erhalten, die digitalisiert empfangen werden, wobei jeder Korrelator einen Trägerkorrelationskanal (100, 102) zwischen dem jeweiligen empfangenen Signal und einem jeweiligen komplexen lokalen Träger (Lp1, Lp2), Codekorrelationskanäle (112, 114) zwischen dem am Ausgang der Trägerkorrelationskanäle korreliert empfangenen Signal und den jeweiligen lokalen Codes, einen Integrator (130, 132, 164, 166) pro Codekorrelationskanal hat, wobei der Empfänger ferner Folgendes aufweist:

- Trägerphasen- und Code-Diskriminatoren (106, 181), wobei die Diskriminatoren für die zwei Korrelationsschaltungen gemeinsam sind und ausgehend von Signalen am Ausgang der Integratoren der zwei Korrelationsschaltungen einerseits, nach einem Codeschleifenkorrektor, ein Nebenträger- und Code-Geschwindigkeitssignal (Vc) und, andererseits, nach einem Trägerschleifenkorrektor, ein Geschwindigkeitssignal für den zentralen Träger (Vp) liefern;
- einen Local-Code-Generator (119, 121, 191, 193) pro Codekorrelationskanal, wobei jeder Codegenerator von einem lokalen Code-Phasensignal am Ausgang mindestens eines Code-Oszillators mit digitaler Steuerung NCOc (118, 190, 192) gesteuert ist, gesteuert von dem Nebenträger-Geschwindigkeitssignal (Vc), wobei die lokalen Codes, die von jedem Codegenerator geliefert werden, um eine positive Differenzialverzögerungskorrektur $+\Delta\tau_{cal}$ für eine der Korrelationsschaltungen und um eine negative Differenzialverzögerungskorrektur $-\Delta\tau_{cal}$ für die andere verschoben sind, wobei diese Korrekturen dazu tendieren, den Verzögerungsunterschied zwischen den zwei in den analogen Kanälen des Empfangskanals empfangenen Signalen zu kompensieren;
- einen Generator (43, 45) für komplexen lokalen Träger pro Trägerkorrelationskanal, wobei jeder Generator für lokalen Träger von einem lokalen Trägerphasensignal am Ausgang mindestens eines Träger-Oszillators mit digitaler Steuerung NCOp (104, 194, 195) gesteuert wird, der von einem Geschwindigkeitssignal des zentralen Trägers gesteuert wird.

2. Empfänger zum Positionieren durch Satelliten nach Anspruch 1, **dadurch gekennzeichnet, dass** er ferner eine Korrekturvorrichtung des Phasendifferenzials $\Delta\varphi_{cal}$ aufweist, die dazu tendiert, den Phasendifferenzialabstand zwischen den zwei empfangenen Signalen S1, S2, der in den analogen Kanälen des Empfangskanals auftritt, zu kompensieren.

3. Empfänger zum Positionieren durch Satelliten nach einem der Ansprüche 1 oder 2, **dadurch gekennzeichnet, dass** jeder Empfangskanal ferner Folgendes aufweist:

- einen Nebenträger-Korrelationskanal pro empfangenem Signal S1, S2 mit komplexen, lokalen Nebenträgern, die von einem jeweiligen Nebenträgergenerator (111, 113) erzeugt werden, der von einem lokalen Nebenträger-Phasensignal am Ausgang des Code-Oszillators mit digitaler Steuerung NCOc (118) gesteuert wird, wobei jeder Nebenträger-Korrelationskanal die korrelierten Signale seines jeweiligen Träger-Korrelationskanals (100, 102) empfängt und Nebenträger-Korrelationssignale an seinen jeweiligen Codekorrelationskanal (112, 114) liefert, wobei das lokale Nebenträger-Phasensignal um die Differenzialphase $\Delta\varphi_{cal}$ verschoben ist, die dazu tendiert, das Phasendifferenzial zwischen den zwei empfangenen Signalen, das in den analogen Kanälen des Empfangskanals auftritt, zu kompensieren.

4. Empfänger zum Positionieren durch Satelliten nach einem der Ansprüche 1 bis 3, **dadurch gekennzeichnet, dass** er ferner eine Kalibriervorrichtung (140) aufweist, die ausgehend von den Phasendifferenzial- und Verzögerungswerten, die von den verschiedenen Kanälen (R1, R2,... RN) des Empfängers geschätzt werden, die Korrekturwerte des Phasendifferenzials $\Delta\varphi_{cal}$ und Korrekturwerte des Verzögerungsdifferenzials $\Delta\tau_{cal}$ liefert, die am Ausgang der Träger- (oder Nebenträger-) und Code-Oszillatoren mit digitaler Steuerung NCO auf allen Kanälen anzulegen sind.

5. Lokalisierungsempfänger nach einem der Ansprüche 1 bis 4, **dadurch gekennzeichnet, dass** jeder Kanal die erste Korrelationsschaltung (40) aufweist, die von einem ersten empfangenen Signal S1 getrieben wird, und die zweite Korrelationsschaltung (42), die von dem zweiten empfangenen Signal S2 getrieben wird, wobei jede Korrelationsschaltung einen Korrelationskanal für zentralen Träger (100, 102) zwischen ihrem jeweiligen empfangenen Signal S1, S2 und zwei jeweiligen komplexen lokalen Trägern Lp1 für den ersten Korrelationskanal (100) und Lp2 für den zweiten Korrelationskanal (102) aufweist, wobei diese lokalen Träger von einem jeweiligen Generator für lokalen Träger (43, 45) erzeugt werden, der von einem lokalen Phasensignal $\varphi_p$ am Ausgang eines gemeinsamen Oszillators mit digitaler Steuerung NCOp (104) für zentralen Träger gesteuert wird, der von dem Trägergeschwindigkeitssignal Vp am Ausgang einer Schaltung von Diskriminatoren (106) für Phase eines zentralen Trägers DSP über einen Phasenkorrektor für zentralen Träger CRP (107) gesteuert wird, wobei die Signale am Ausgang der Korrelationskanäle für zentralen Träger auf Nebenträger-Korrelationskanäle (108, 110) mit jeweiligen lokalen Nebenträgern Ls1 für den ersten Nebenträger-Korrelationskanal und Ls2 für den anderen Korrelationskanal angelegt werden und dann auf die Codekorrelationskanäle (112, 114).

6. Lokalisierungsempfänger nach Anspruch 5, **dadurch gekennzeichnet, dass** die lokalen Nebenträger Ls1 und Ls2 jeweils von einem Generator für lokalen Nebenträger (111, 113) erzeugt werden, der von einem lokalen Nebenträger-Phasensignal $\varphi_{sp}$ am Ausgang eines gemeinsamen Oszillators mit digitaler Steuerung NCOc für lokalen Nebenträger und Code (118) gesteuert wird, der von einem Codegeschwindigkeitssignal Vc am Ausgang eines Code-Phasendiskriminators DSC der Schaltung der Diskriminatoren (106) über einen Codephasenkorrektor CRC (120) und einen Nebenträger-Phasensummierer (122) gesteuert wird, der an einem Eingang ep1 die Nebenträgerphase vom Ausgang des Code-Oszillators NCOc (118) und an einem anderen Eingang ep2 eine Korrektur des Phasendifferenzials $\Delta\varphi_{cal}$ empfängt, die dazu tendiert, das Phasendifferenzial zwischen den zwei empfangenen Signalen, das in den analogen Kanälen des Empfängers auftritt, zu kompensieren, wobei der Nebenträger-Phasensummierer (122) an seinen Ausgang ein lokales Phasensignal der phasenverschobenen Nebenträger liefert, um den Nebenträgergenerator der Nebenträger-Korrelationskanäle zu treiben.

7. Lokalisierungsempfänger nach Anspruch 6, **dadurch gekennzeichnet, dass** die Signale am Ausgang der Nebenträger-Korrelationskanäle (108, 110) dann in den jeweiligen Codekorrelationskanälen (112, 114) mit den jeweiligen lokalen Codes korreliert werden, die von den jeweiligen Local-Code-Generatoren (119, 121) für den Signalkanal S1 und den Signalkanal S2 geliefert werden, wobei die Local-Code-Generatoren (119, 121) von einem jeweiligen Codephasensignal $\varphi_{CA}$, $\varphi_{CB}$ am Ausgang des gemeinsamen Code-Oszillators NCOc (118) gesteuert werden, gesteuert von dem Nebenträger- (oder Codegeschwindigkeits-) Signal Vc durch einen ersten Local-Code-Summierer (124), der an einem Eingang ec1 die Phase des lokalen Codes vom Ausgang des Local-Code-Oszillators und an einem anderen Eingang ec2 eine Differenzialverzögerungskorrektur $-\Delta\tau_{cal}$ empfängt, die dazu tendiert, die Differenzialverzögerung zu kompensieren, wobei der erste Summierer (124) an einen Ausgang eine verschobene Local-Code-Phase zum Steuern des Local-Code-Generators (119) des Signalkanals S1 liefert, und wobei ein zweiter Local-Code-Summierer (126) an einen Eingang ec1 die Phase des Local-Code-Oszillators NCOc vom Ausgang empfängt und an einem anderen Eingang ec2 eine Differenzialverzögerungskorrektur $+\Delta\tau_{cal}$, die dazu tendiert, die Differenzialverzögerung zu kompensieren, wobei der zweite Local-Code-Summierer (126) an einen Ausgang eine verschobene Local-Code-Phase zum Steuern des Local-Code-Generators (118) des Signalkanals S2 liefert.

8. Empfänger zum Positionieren durch Satelliten nach einem der Ansprüche 1 oder 2, **dadurch gekennzeichnet, dass** jeder Empfangskanal einen Code-NCOc (190, 192) für jede Komponente des Signals S1 und S2 aufweist, und dass die jeweilige positive $+\Delta\tau_{cal}$ und negative $-\Delta\tau_{cal}$ Differenzialverzögerungskorrektur durch Anlegen an die Eingänge der Code-NCOc jeweiliger Korrektursignale $+d\Delta\tau_{cal}/dt$ und $-d\Delta\tau_{cal}/dt$ ausgeführt werden, die von dem Differenzialverzögerungssignal $+\Delta\tau_{cal}$ und $-\Delta\tau_{cal}$ in Bezug zu der Zeit t abgeleitet sind, und dass man am Ausgang der Code-Oszillatoren NCOc (190, 192) mit digitaler Steuerung eine jeweilige Korrektur $+\Delta\tau_{0i}$ und $-\Delta\tau_{0i}$ anlegt, die jedem Kanal i eigen ist und von dem ursprünglichen Zustand der Code-Oszillatoren NCOc zum Zeitpunkt abhängt, an dem der Empfangskanal mit der Nachführung im kohärenten Modus des Signals beginnt.

9. Empfänger zum Positionieren durch Satelliten nach einem der Ansprüche 5 bis 8, **dadurch gekennzeichnet, dass** jede der Korrelationsschaltungen (160, 162) des Empfangskanals einen Integrator INT (164, 166) aufweist, der jeweils die folgenden Signale liefert:

für den Korrelator (160) des Trägers E5a:

$$Z_{Aa} = I_{Aa} + iQ_{Aa}$$

$$Z_{Pa} = I_{Pa} + iQ_{Pa}$$

$$Z_{Ra} = I_{Ra} + iQ_{Ra}$$

für den Korrelator (162) des Trägers E5b:

$$Z_{Ab} = I_{Ab} + iQ_{Ab}$$

$$Z_{Pb} = I_{Pa} + iQ_{Pb}$$

$$Z_{Rb} = I_{Ra} + iQ_{Rb}$$

die den Codes Vorlauf A, Pünktlich P und Verzögerung R entsprechen.

10. Empfänger zum Positionieren durch Satelliten nach einem der Ansprüche 5 bis 10, **dadurch gekennzeichnet, dass** eine Kompensation des Phasendifferenzials am Ausgang der Korrelatoren der zwei Schaltungen vor den Diskriminatoren (181) durch ein Kompensationsmodul (182) angewandt wird, wobei die Diskriminatoren eine Codefehlersignal $\varepsilon_\varphi$ und ein Phasengeschwindigkeitsfehlersignal $\varepsilon_\varphi$ zum Steuern der Schleifen liefern.

11. Empfänger zum Positionieren durch Satelliten nach einem der Ansprüche 5 bis 10, **dadurch gekennzeichnet, dass** jeder Empfangskanal Folgendes aufweist:

- einen Summierer Sp1, der durch einen Eingang e1 ein Codegeschwindigkeitssignal nach einer Codegeschwindigkeitskorrektur CRC (180) und durch einen Eingang e2 das abgeleitete Korrektursignal $-d\Delta\tau_{cal}/dt$ empfängt und an einen Ausgang das Summensignal der Signale liefert, die an seine zwei Eingänge e1 und e2 angelegt werden, um die Steuerung des Code-Oszillators NCOc (190) der Korrelationsschaltung, die den Träger E5a empfängt, zu treiben, und
- einen Summierer Sp2, der durch einen Eingang e1 das Codegeschwindigkeitssignal $\varepsilon_\tau$ nach der Codegeschwindigkeitskorrektur CRC (180) und durch einen Eingang e2 das abgeleitete Korrektursignal $-d\Delta\tau_{cal}/dt$ empfängt und an einen Ausgang das Summensignal der Signale liefert, die an seine zwei Eingänge angelegt werden, um die Steuerung des Code-Oszillators NCOc (192) der anderen Korrelationsschaltung, die den Träger E5b empfängt, zu treiben,
- einen Summierer Sp3, der durch einen Eingang e1 das Signal am Ausgang des Code-Oszillators NCOc (190) und durch einen Eingang e2 eine Korrektur $-\Delta\tau_{0i}$, die für jeden Kanal eigen ist, empfängt und an einen Ausgang das Summensignal der Signale liefert, die an seine zwei Eingänge e1 und e2 angelegt werden, um die Phase der Codegeneratoren (191) der Korrelationsschaltung, die den Träger E5b empfängt, zu liefern;
- einen Summierer Sp4, der durch einen Eingang e1 das Signal am Ausgang des Code-Oszillators NCOc (192) und durch einen Eingang e2 eine Korrektur $+\Delta\tau_{0i}$, die dem Kanal i eigen ist, empfängt, und an einen Ausgang das Summensignal der Signale liefert, die an seine zwei Eingänge e1 und e2 angelegt werden, um die Phase der Codegeneratoren (193) der anderen Korrelationsschaltung, die der Träger E5b empfängt, zu liefern;
- pro Korrelationsschaltung einen Oszillator NCOp (194, 195) für zentralen Träger, der von dem Geschwindigkeitssignal Vp des zentralen Trägers gesteuert wird, der von einem Trägerschleifenkorrektor CRP (196) geliefert wird, der von den Ausgängen der Diskriminatoren (181) versorgt wird.

12. Empfänger zum Positionieren durch Satelliten nach einem der Ansprüche 1 bis 11, **dadurch gekennzeichnet, dass** der Code-Diskriminator den Ausgang der Korrelationskanäle Vorlauf, Pünktlich und Verzögerung auf S1 und S2 (nach Kalibrieren) verwendet.

**FIG.1**

**FIG.2**

**1 canal = 1 satellite (SV i)**

FIG.3

——— Signal réel

—— Signal complexe

FIG.4

Compensation de retard
de phase différentiel

Compensation de retard
de propagation différentiel

—— Signal réel
━━ Signal complexe

FIG.5

$R(\tau)$

$R_{cos}(\tau) = cos(\omega_{sp}.\tau) \cdot R(\tau)$

$- T_{chip}$    0    $+T_{chip}$   $\tau$

$T_{chip}$ : durée d'un créneau de code d'étalement    **FIG.6**

$R_{cos}(\tau)$

$\varepsilon_\tau(\varphi, \tau, 0, 0)$

$- T_{chip}$    0    $+T_{chip}$   $\tau$

$T_{chip}$ : durée d'un créneau de code d'étalement    **FIG.7**

$cos\{\omega_{sp}.\tau+\Delta\varphi\}.R(\tau)$

$\varepsilon_\tau(\varphi, \tau, \Delta\varphi_0, 0)$

$- T_{chip}$    0    $+T_{chip}$   $\tau$

$T_{chip}$ : durée d'un créneau de code d'étalement    **FIG.8**

FIG.9

EP 1 934 624 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• WO 0305457 A